# EUROPÄISCHE PATENTSCHRIFT

(11) **EP 4 399 491 B1**
(45) Veröffentlichungstag und Bekanntmachung des Hinweises auf die Patenterteilung: **09.07.2025**
(21) Anmeldenummer: 22765848.1
(22) Anmeldetag: 17.08.2022
(51) Int. Cl.: G01D 21/00, G01D 5/244, H04L 67/12

(54) **SIGNALVERARBEITUNGSVORRICHTUNG, DREHMESSEINRICHTUNG, DREHMESSSYSTEM UND FAHRZEUG**
SIGNAL PROCESSING DEVICE, ROTARY MEASURING DEVICE, ROTARY MEASURING SYSTEM, AND VEHICLE
DISPOSITIF DE TRAITEMENT DE SIGNAUX, DISPOSITIF DE MESURE ROTATIF, SYSTÈME DE MESURE ROTATIF ET VÉHICULE

(30) Priorität: 08.09.2021 DE 102021123243
(43) Veröffentlichungstag der Anmeldung: 17.07.2024
(73) Patentinhaber: ZF CV Systems Global GmbH, 3006 Bern (CH)
(72) Erfinder: KLOTZ, Eckard, 31812 Bad Pyrmont (DE)
(74) Vertreter: Copi, Joachim
(86) Internationale Anmeldenummer: PCT/EP2022/073012
(87) Internationale Veröffentlichungsnummer: WO 2023/036577

(56) Entgegenhaltungen:
- DE-A1- 102017 130 000
- DE-A1- 102018 121 998
- DE-A1- 102020 103 106
- DE-T5- 112015 002 417
- US-A1- 2003 141 862

## Beschreibung

Aus der DE 10 2020 103106 A1 ist ein System zur Kurbelwellenzahn-Codierung eines Kurbelimpulsrads eines Fahrzeugs bekannt.

Die Erfindung betrifft eine Signalverarbeitungsvorrichtung gemäß Anspruch Die Erfindung betrifft weiter eine Drehmesseinrichtung, ein Drehmesssystem und ein Fahrzeug.

Eine solche Signalverarbeitungsvorrichtung dient zur Signalverarbeitung für eine Drehmesseinrichtung. Die Drehmesseinrichtung weist einen Drehmesssensor und einen rotativen Maßkörper auf, wobei der rotative Maßkörper eine Merkmalsanzahl von entlang einer Kreisbahn angeordneten Messmerkmalen aufweist, die insbesondere äquidistant angeordnet sind.

Ein Messmerkmal kann je nach Bauart des rotativen Maßkörpers auf unterschiedliche Art ausgebildet sein. Der rotative Maßkörper kann beispielsweise eine geometrische, optische oder magnetische Maßverkörperung in Form von Messmerkmalen aufweisen.

Solche Drehmesseinrichtungen sind allgemein bekannt, insbesondere im Bereich von Maschinen und Fahrzeugen. Mittels einer Drehmesseinrichtung kann eine momentane Drehposition eines rotierenden Teils wie z.B. einer Welle oder eines Rads, bestimmt werden. Weiter können Drehrichtung, Drehgeschwindigkeit und weitere bewegungs- und/oder positionsbezogene Parameter mittels einer Drehmesseinrichtung bestimmt werden. Für eine Drehmesseinrichtung sind unterschiedlichste Drehmesssensoren bekannt, deren Sensorprinzip auf jeweils unterschiedlichem Messprinzip beruht, beispielsweise einem magnetischen, optischen oder induktiven Messprinzip beruht. Bei einem magnetischen Messprinzip kann insbesondere mittels eines Hall-Sensors eine Spannungsänderung ausgegeben werden, die charakteristisch für eine momentane Lage eines Maßkörpers relativ zum Hall-Sensor ist. Ein Hall-Sensor ermöglicht vorteilhaft eine zuverlässige Positionsbestimmung unabhängig von der Drehzahl, insbesondere auch, wenn das rotierende Teil steht oder relativ langsam dreht.

Zur Signalverarbeitung ist die Signalverarbeitungsvorrichtung ausgebildet aufeinanderfolgende Nachrichtensequenzen zur Verfügung zu stellen. Regelmäßig kann die Art einer Nachrichtensequenz in einem zugeordneten Datenprotokoll festgelegt sein. Datenprotokolle, insbesondere Datenfolgen, für Drehmesseinrichtungen sind ebenfalls bekannt. So kann generell in einem Datenprotokoll oder für eine Datenfolge eine Vorgabevorschrift gegeben sein, die ein Schema von Nachrichten in einer bereitgestellten Abfolge, d.h. in einer sogenannten Nachrichtensequenz, vorgibt, nämlich zum Bereitstellen und Übermitteln von Messdaten der Drehmesseinrichtung.

So kann eine eingangs genannte Signalverarbeitungsvorrichtung zur Ausgabe von Nachrichtensequenzen ausgebildet sein, wobei eine Nachrichtensequenz eine Nachrichtenanzahl von aufeinanderfolgenden Nachrichten aufweist, derart, dass zeitlich aufeinanderfolgende Nachrichten - zeitlich nacheinander dem Drehmesssensor wechselwirkenden, örtlich benachbarten - Messmerkmalen zugeordnet sind.

Es ist die eingangs genannte Signalverarbeitungsvorrichtung zur Ausgabe von Nachrichtensequenzen derart ausgebildet, dass jede Nachricht in einer aus einer vorbestimmten Anzahl von Nachrichtenarten ausgewählten Nachrichtenart zur Verfügung gestellt wird.

Es ist die eingangs genannte Signalverarbeitungsvorrichtung zur Ausgabe von Nachrichtensequenzen derart ausgebildet, dass eine an einer Auswahlposition der Nachrichtensequenz angeordnete Nachricht eine Nachricht vorbestimmter Art ist, welche eine Merkmalseigenschaft des zugeordneten Messmerkmals beschreibt.

Drehmesseinrichtungen, Drehmesssysteme und Signalverarbeitungsvorrichtungen, insbesondere elektronische Signalverarbeitungsvorrichtungen, sind bezüglich der Signalverarbeitung weiterhin verbesserungswürdig. Insbesondere betrifft dies eine möglichst geringe Fehleranfälligkeit und verbesserte Diagnosemöglichkeit bei der Signalverarbeitung.

Wünschenswert ist es daher, eine verbesserte Signalverarbeitungsvorrichtung für eine Drehmesseinrichtung sowie eine Drehmesseinrichtung und ein Drehmesssystem anzugeben.

An dieser Stelle setzt die Erfindung an, deren Aufgabe es ist, in verbesserter Weise eine elektronische Signalverarbeitungsvorrichtung und eine Drehmesseinrichtung anzugeben, bei dem die Nachteile des Standes der Technik zumindest teilweise behoben werden. Insbesondere sollen eine möglichst geringe Fehleranfälligkeit und verbesserte Diagnosemöglichkeiten ermöglicht werden.

Die Aufgabe, betreffend die Signalverarbeitungsvorrichtung, wird durch die Erfindung mit einer Signalverarbeitungsvorrichtung des Anspruchs 1 gelöst.

Die Erfindung geht aus von einer Signalverarbeitungsvorrichtung für eine Drehmesseinrichtung, bevorzugt für ein Fahrzeug, mit einem Drehmesssensor und einem rotativen Maßkörper, wobei der rotative Maßkörper eine Merkmalsanzahl von Messmerkmalen aufweist, wobei die Signalverarbeitungsvorrichtung ausgebildet ist, zeitlich aufeinanderfolgende Nachrichtensequenzen zur Verfügung zu stellen, und eine Nachrichtensequenz eine Nachrichtenanzahl von aufeinanderfolgenden Nachrichten aufweist, derart, dass örtlich benachbarten Messmerkmalen zeitlich nacheinander zugeordnet sind, wobei die Messmerkmale mit dem Drehmesssensor wechselwirken, und jede Nachricht in einer aus einer vorbestimmten Anzahl von Nachrichtenarten ausgewählten Nachrichtenart zur Verfügung gestellt wird, und eine an einer Auswahlposition der Nachrichtensequenz angeordnete Nachricht eine Nachricht vorbestimmter Art ist, welche eine Merkmalseigenschaft des zugeordneten Messmerkmals beschreibt.

Erfindungsgemäß ist bei der Signalverarbeitungsvorrichtung vorgesehen, dass die aufeinanderfolgenden Nachrichtensequenzen eine erste und eine zweite Nachrichtensequenz aufweisen, die Signalverarbeitungsvorrichtung ausgebildet ist, für die Nachrichtensequenz die Auswahlposition auszuwählen, derart, dass für die erste Nachrichtensequenz eine erste Auswahlposition für eine erste Nachricht vorbestimmter Art bereitgestellt wird, und für die zweite Nachrichtensequenz eine zweite Auswahlposition für eine zweite Nachricht der gleichen vorbestimmten Art bereitgestellt wird.

Das "örtlich benachbarte" Messmerkmal" meint bevorzugt ein "unmittelbar benachbartes Messmerkmal", also allgemein meint es das "in einer definierten Abfolge von Merkmalen das nächste Merkmal nach einem vorhergehenden". Entsprechend meint "zeitlich aufeinanderfolgende Nachrichten" bevorzugt "zeitlich direkt aufeinanderfolgende Nachrichten" und meint im Übrigen das zeitliche Analogon - d.h. es handelt sich um eine Nachrichten-Sequenz und eine Messmerkmalsfolge, in der ein Element (Nachricht/Messmerkmal) "n+1" nach einem vorhergehenden "n" folgt. Hintergrund ist die Bindung an eine feste Abfolge oder ein festes Verhältnis einer Zuordnung.

Vor allem besteht die Zuordnung bevorzugt zwischen unmittelbar benachbarten Messmerkmalen und jeweils den zeitlich direkt nacheinander folgenden Nachrichten. Bevorzugt soll also vor allem "unmittelbar" heißen, dass "in der Abfolge von Messmerkmalen das nächste Messmerkmal ohne einem dazwischen liegenden Messmerkmal" folgt und "zeitlich direkt" soll das zeitliche Analogon meinen, bei dem eine Nachricht "ohne eine dazwischenliegende Nachricht" auf die vorhergehende Nachricht folgt. Es kann in einer Abwandlung ggfs. zwischen zwei Elementen (Nachricht/Messmerkmal) ein anderes (ggfs. ungenutzt liegen); aber die Bindung an eine feste Abfolge oder ein festes Verhältnis einer Zuordnung zwischen benachbarten Messmerkmalen und jeweils den zeitlich nacheinander folgenden Nachrichten bleibt.

Kurz gesagt ist damit also gemeint, dass eine Nachrichtensequenz eine Nachrichtenanzahl von aufeinanderfolgenden Nachrichten aufweist, derart, dass zeitlich aufeinanderfolgende Nachrichten - zeitlich nacheinander mit dem Drehmesssensor wechselwirkenden örtlich benachbarten - Messmerkmalen zugeordnet sind.

Dadurch, dass für die erste Nachrichtensequenz eine erste Auswahlposition für die erste Nachricht vorbestimmte Art bereitgestellt wird, für die zweite Nachrichtensequenz eine zweite Auswahlposition für eine zweite Nachricht der gleichen vorbestimmten Art bereitgestellt wird, wird vorteilhaft eine für die erste und für die zweite Nachrichtensequenz individuelle Auswahlposition bereitgestellt. Die Nachricht der gleichen vorbestimmten Art kann auf diese Weise vorteilhaft bei unterschiedlichen Nachricht Sequenzen auf einer jeweils unterschiedlichen Auswahlposition angeordnet werden.

Weil auf der Auswahlposition die Nachricht vorbestimmte Art angeordnet ist, die eine Merkmalseigenschaft des zugeordneten Messmerkmals beschreibt, wird durch die - mit unterschiedlichen Nachrichtensequenzen wechselnde - Anordnung der Auswahlposition eine wechselnde Erfassung von Messmerkmalen hinsichtlich der Merkmalseigenschaft erreicht.

Hierdurch wird vorteilhaft eine Erfassung von Messmerkmalen hinsichtlich der Merkmalseigenschaft erreicht, die unabhängig von einem Verhältnis aus Merkmalsanzahl und Nachrichtenanzahl ist. Insbesondere kann vorteilhaft vermieden werden, dass einzelne Messmerkmale nicht immer wiederkehrend bei jeder Rotation des rotativen Maßkörpers übersprungen werden. es wird eine verbesserte Erfassung von Messmerkmalen hinsichtlich der Merkmalseigenschaft erreicht, insbesondere im Hinblick auf die Vollständigkeit der Erfassung der Messmerkmale eines rotativen Maßkörpers. Dadurch kann die Diagnose, insbesondere eine Fehlererkennung, in der Drehmesseinrichtung verbessert werden.

Die Erfindung führt in einem zweiten Aspekt auf eine Drehmesseinrichtung für ein rotierendes Teil, bevorzugt für ein Fahrzeug, besonders bevorzugt für eine Welle oder ein Rad eines Fahrzeugs, aufweisend: einen Drehmesssensor mit einem Messwertaufnehmer, einen rotativen Maßkörper mit einer Merkmalsanzahl von Messmerkmalen, insbesondere wobei die Messmerkmale entlang einer Kreisbahn und/oder äquidistant angeordnet sind, und eine Signalverarbeitungsvorrichtung gemäß dem ersten Aspekt der Erfindung, die signalführend mit dem Messwertaufnehmer verbunden ist. Vorteilhaft ist die Signalverarbeitungsvorrichtung in den Drehmesssensor integriert, besonders vorteilhaft zusammen mit dem Messwertaufnehmer in einem Gehäuse untergebracht.

Die Erfindung führt in einem dritten Aspekt auf ein Drehmesssystem, bevorzugt für ein Fahrzeug, aufweisend mindestens eine Drehmesseinrichtung gemäß dem zweiten Aspekt der Erfindung, und eine Zuordnungseinheit, die ausgebildet ist, die an einer Auswahlposition der Nachrichtensequenz angeordnete Nachricht vorbestimmter Art, insbesondere eine Statusnachricht einer Nachrichtensequenz, einem Messmerkmal zuzuordnen.

Die Erfindung führt in einem vierten Aspekt auf ein Fahrzeug, aufweisend eine Drehmesseinrichtung, insbesondere für eine Welle oder ein Rad des Fahrzeugs, gemäß dem zweiten Aspekt der Erfindung.

Eine Drehmesseinrichtung gemäß dem zweiten Aspekt oder ein Drehmesssystem gemäß dem dritten Aspekt der Erfindung kann besonders vorteilhaft in einem Fahrzeug eingesetzt werden, da durch die Signalverarbeitungsvorrichtung gemäß dem ersten Aspekt der Erfindung in verbesserter Weise eine geringere Fehleranfälligkeit und/oder eine verbesserte Diagnosemöglichkeit der Drehmesseinrichtung erreicht wird. Dadurch kann insbesondere die Sicherheit und Zuverlässigkeit des Fahrzeugs vorteilhaft erhöht werden.

Gemäß einem fünften Aspekt der Erfindung ist ein Verfahren vorgesehen zur Signalverarbeitung für eine Drehmesseinrichtung mit einem Drehmesssensor und einem rotativen Maßkörper, wobei der rotative Maßkörper eine Merkmalsanzahl von Messmerkmalen aufweist, wobei das Verfahren zur Signalverarbeitung den Schritt aufweist: zur Verfügung Stellen zeitlich aufeinanderfolgender Nachrichtensequenzen, wobei eine Nachrichtensequenz eine Nachrichtenanzahl von aufeinanderfolgenden Nachrichten aufweist, derart, dass zeitlich aufeinanderfolgende Nachrichten - zeitlich nacheinander mit dem Drehmesssensor wechselwirkenden örtlich benachbarten - Messmerkmalen zugeordnet sind, und jede Nachricht in einer aus einer vorbestimmten Anzahl von Nachrichtenarten ausgewählten Nachrichtenart zur Verfügung gestellt wird, und eine an einer Auswahlposition der Nachrichtensequenz angeordnete Nachricht eine Nachricht vorbestimmter Art ist, welche eine Merkmalseigenschaft des zugeordneten Messmerkmals beschreibt.

Bei dem Verfahren gemäß dem fünften Aspekt ist vorgesehen, dass die aufeinanderfolgenden Nachrichtensequenzen eine erste und eine zweite Nachrichtensequenz aufweisen. Bei dem Verfahren gemäß dem fünften Aspekt ist der Schritt vorgesehen: Auswählen der Auswahlposition für die Nachrichtensequenz, derart, dass für die erste Nachrichtensequenz eine erste Auswahlposition für eine erste Nachricht vorbestimmter Art bereitgestellt wird, und für die zweite Nachrichtensequenz eine zweite Auswahlposition für eine zweite Nachricht der gleichen vorbestimmten Art bereitgestellt wird.

Das Verfahren ist vorteilhafterweise in Form eines computerimplementierten Verfahrens ausgebildet, umfassend die Schritte des Verfahrens zur Signalverarbeitung.

Gemäß einem sechsten Aspekt der Erfindung ist ein Computerprogramm-Produkt vorgesehen, wobei das Computerprogramm-Produkt, Befehle umfasset, die bei der Ausführung des Programms durch einen Computer oder dergleichen elektronische Steuereinrichtung (ECU), in einer besonders vorteilhaften Weise im Rahmen einer Rechen- und Datenverarbeitungs-Einrichtung, diese veranlassen, die Schritte des Verfahrens nach dem fünften Aspekt auszuführen.

Vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Es ist auch zu verstehen, dass die Signalverarbeitungsvorrichtung, vorzugsweise mit zugeordnetem Datenprotokoll, gemäß dem ersten Aspekt der Erfindung, die Drehmesseinrichtung gemäß dem zweiten Aspekt der Erfindung, das Drehmesssystem gemäß dem dritten Aspekt der Erfindung und das Fahrzeug gemäß dem vierten Aspekt, das Verfahren gemäß dem vierten Aspekt der Erfindung und das Computerprogramm-Produkt gemäß dem fünften Aspekt der Erfindung der Erfindung gleiche und ähnliche Unteraspekte aufweisen, wie sie insbesondere in den Unteransprüchen festgelegt sind. Insofern wird für die Weiterbildung eines Aspekts der Erfindung auch auf die Weiterbildungen der anderen Aspekte der Erfindung verwiesen.

Ein Messmerkmal wird vorteilhaft durch Eigenschaften des rotativen Maßkörpers gebildet, insbesondere durch die geometrischen, optischen oder magnetischen Eigenschaften des rotativen Maßkörpers. Neben der Erfassung eines kontinuierlichen Messsignals, das die momentane Drehposition des rotierenden Teils beschreibt, hat es sich als vorteilhaft erwiesen, Messmerkmale über charakteristische, insbesondere zuverlässig erfassbare, Stellen am rotativen Maßkörper festzulegen. So kann ein Messmerkmal an einer Stelle einer lokalen Maximal- oder Minimalausprägung des rotativen Maßkörpers angeordnet sein, beispielsweise an einer Stelle einer lokal maximal oder minimal ausgeprägten Magnetisierung oder radialen Ausdehnung (bspw. am Maximum eines Zahnkopfes oder am Minimum eines Zahntals) oder dergleichen. Auch ist eine Kombination möglich, sodass durch jedes lokale Maximum und durch jedes lokale Minimum ein Messmerkmal gebildet ist.

Alternativ oder zusätzlich kann ein Messmerkmal durch andere Eigenschaften des rotativen Maßkörpers gebildet sein, vorteilhaft durch die Stelle einer lokalen Änderung, insbesondere maximalen Änderung, --allgemein einer Eigenschaft oder einem Übergang zwischen Eigenschaften--des rotativen Maßkörpers.

Eine derartige Stelle kann beispielsweise durch eine Zahnflanke an einem Übergang von einem Zahnkopf zu einem Zahntal, oder durch einen Übergang zwischen zwei magnetischen Polen, gebildet sein. Es soll daher verstanden werden, dass zu einer Maßverkörperung auf dem rotativen Maßkörper, beispielsweise einem Zahn oder einer Zahn-Tal-Paarung oder einem Magnetpol, eine oder mehrere Messmerkmale zugeordnet sein können.

Ein rotativer Maßkörper kann in einer bevorzugten Weiterbildung --die auch in Bezug auf die Ausführungsformen als Polrad (engl. Target) näher beschrieben ist-- als Polrad (engl. Target) realisiert werden. Gleichwohl sind unterschiedlichste Realisierungsvarianten dieser oder anderer Ausführungsformen möglich, z.B. als Zahn- oder Lochrad oder magnetisiertes Rad, etwa in Form einer Trommel, Scheibe oder dgl. Eine hier teilweise erfolgende Bezugnahme auf ein Polrad (engl. Target) als Ausführungsbeispiel ist insofern keinesfalls einschränkend sondern beispielhaft zur Erläuterung eines allgemeinen Prinzips zu verstehen.

Als Datenprotokoll wird eine Vorschrift über die Reihenfolge von Nachrichten verstanden, die von der Signalverarbeitungsvorrichtung oder der Drehmesseinrichtung bereitgestellt werden. Das Datenprotokoll kann somit lediglich der Festlegung einer Datenfolge dienen. In Weiterbildungen kann das Datenprotokoll weitere Vorschriften umfassen, beispielsweise zur Festlegung der Länge und/oder der Codierung einzelner Nachrichten.

Vorteilhaft ist die erste Auswahlposition von der zweiten Auswahlposition unterschiedlich. Vorteilhaft weist die Signalverarbeitungsvorrichtung zum Auswählen der Auswahlposition ein Auswahlmodul auf.

Im Rahmen einer bevorzugten Weiterbildung ist vorgesehen, dass die Signalverarbeitungsvorrichtung und/oder das Auswahlmodul ausgebildet ist, für jede Nachrichtensequenz eine Auswahlposition auszuwählen. In einer derartigen Weiterbildung wird vorteilhaft für jede Nachrichtensequenz eine, insbesondere von der vorherigen Nachrichtsequenz unterschiedliche, Auswahlposition für eine vorteilhaft wechselnde Zuordnung vorgenommen.

Im Rahmen einer bevorzugten Weiterbildung ist vorgesehen, dass die Nachricht vorbestimmter Art eine Statusnachricht ist, insbesondere eine Peak-to-Peak-Nachricht, die eine Amplitude einer lokalen Messsignaländerung des Drehmesssensors beschreibt, oder eine Temperaturnachricht, die eine Temperatur am Drehmesssensor beschreibt. Durch eine Statusnachricht wird vorteilhaft in gemäß einem Datenprotokoll standardisierter Weise eine Eigenschaft des Messmerkmals beschrieben. Eine Statusnachricht ist vorteilhaft als eine Peak-to-Peak-Nachricht oder als eine Temperaturnachricht ausgebildet nach dem Wesen eines AK-Protokolls, insbesondere eines in der Version 4.0. Mittels einer Temperaturnachricht können vorteilhaft Temperaturerhöhungen detektiert werden, die beispielsweise auf Hitzeentwicklung am Maßkörper oder Sensor oder umliegenden Komponenten wie Bremsen oder Räder schließen lassen. Eine derartige Temperaturerhöhung lässt auf eine Unregelmäßigkeit oder einen möglichen Schaden schließen, der vorteilhaft mittels einer Temperaturnachricht detektiert werden kann.

Im Rahmen einer bevorzugten Weiterbildung ist vorgesehen, dass die Signalverarbeitungsvorrichtung ausgebildet ist zum Erkennen einer Nachrichtenart der Nachricht anhand einer Eigenschaftskennung, die bevorzugt durch zwei Nachrichtenbits jeder Nachricht gebildet wird, besonders bevorzugt durch die ersten zwei Nachrichtenbits jeder Nachricht gebildet wird. Insbesondere weist die Signalverarbeitungsvorrichtung eine Identifikationseinheit für ein derartiges Erkennen der Nachrichtenart auf. Durch ein derartiges Erkennen der Nachrichtenart kann, vorteilhaft mit relativ geringem Verarbeitungsaufwand, die Bedeutung jeder Nachricht bestimmt werden.

Im Rahmen einer bevorzugten Weiterbildung ist vorgesehen, dass die Signalverarbeitungsvorrichtung ausgebildet ist, eine Auswahlposition als Funktion einer Umdrehung des rotativen Maßkörpers und/oder der Nachrichtensequenz auszuwählen. Dies kann insbesondere beinhalten, dass mit jeder Umdrehung des rotativen Maßkörpers die Bestimmung der Auswahlposition auf neue Weise erfolgt, insbesondere genau eine Auswahlposition neu festgelegt wird.

Vorteilhaft ist vorgesehen, dass die Signalverarbeitungsvorrichtung ausgebildet ist, pro einer Umdrehungsanzahl von Umdrehungen des rotativen Maßkörpers oder pro einer Sequenzanzahl von Nachrichtensequenzen eine Auswahlposition bereitzustellen, wobei die erste Auswahlposition und die zweite Auswahlposition Teil einer ganzzahligen Zahlenfolge sind. Dies kann vorteilhaft beinhalten, dass ein Bereitstellen einer Auswahlposition in Abhängigkeit einer Zahlenfolge und insbesondere auch in Abhängigkeit der vorausgegangenen Umdrehungen und/oder Nachrichtensequenzen erfolgt. Die Bereitstellung bzw. Festlegung der Auswahlposition ist somit eine Funktion der Umdrehung und/oder der Nachrichtensequenz, besonders bevorzugt eine Funktion der Umdrehungsanzahl und/oder der Sequenzanzahl.

Vorteilhaft ist vorgesehen, dass die Signalverarbeitungsvorrichtung ausgebildet ist, pro einer Umdrehungsanzahl und/oder Sequenzanzahl die Zahlenfolge um einen ganzzahligen Betrag anzupassen, vorteilhaft den ganzzahligen Betrag zu addieren. Durch eine derartige, insbesondere additive, Veränderung der Zahlenfolge kann mit relativ geringem Rechenaufwand eine effektive Anpassung der Auswahlposition erfolgen. Vorteilhaft ist vorgesehen, dass die Signalverarbeitungsvorrichtung ausgebildet ist, eine mit jeder Umdrehungsanzahl und/oder Sequenzanzahl ganzzahlig aufsteigende Sequenzposition als Auswahlposition bereitzustellen.

Vorteilhaft ist vorgesehen, dass die Signalverarbeitungsvorrichtung ausgebildet ist, eine zufällig erzeugte Zufallszahl als die Auswahlposition auszuwählen, wobei die erste Auswahlposition eine erste Zufallszahl und für die zweite Auswahlposition eine zweite Zufallszahl erzeugt wird, und die Zufallszahl einen ganzzahligen Wert zwischen dem Wert null und dem Wert der Nachrichtenanzahl annehmen kann. eine derartige Erzeugung der Auswahlposition ist vorteilhaft besonders unanfällig gegen etwaige, ungewollte wiederholte Zuordnungen von Nachrichten vorbestimmte Art zu Messmerkmalen. Solche ungewollten Zuordnungen könnten beispielsweise durch bestimmte Konstellationen von Nachrichtenanzahl, Merkmalsanzahl und Auswahlposition auftreten.

Im Rahmen einer bevorzugten Weiterbildung ist vorgesehen, dass die Nachrichtensequenz eine Nachricht vorbestimmter Art ersten Typs mit einer Auswahlposition ersten Positionstyps und eine zweite Nachricht vorbestimmter Art zweiten Typs mit einer zweiten Auswahlposition zweiten Positionstyps umfasst. In einer derartigen Weiterbildung können vorteilhaft unterschiedliche Merkmalseigenschaften in einer Nachrichtensequenz erfasst werden. Vorteilhaft kann die Nachricht vorbestimmter Art ersten Typs eine Peak-to-Peak-Nachricht sein und die Nachricht vorbestimmter Art zweiten Typs eine Temperaturnachricht. Gleichwohl sind auch andere Zuordnungen von Nachrichten vorbestimmter Art möglich.

Vorteilhaft ist vorgesehen, dass die Auswahlposition zweiten Positionstyps an der letzten Sequenzposition jeder Nachrichtensequenz ist, wobei vorteilhaft die zweite Nachricht vorbestimmter Art anhand einer Eigenschaftskennung das Ende der Nachrichtensequenz angibt. In einer derartigen Weiterbildung kann vorteilhaft mittels der zweiten Nachricht vorbestimmter Art sowohl das Ende einer Nachrichtensequenz angezeigt, als auch eine Merkmalseigenschaft beschrieben werden.

Erfindungsgemäß ist eine Kodierungseinheit vorgesehen, die ausgebildet ist zum Kodieren und/oder Dekodieren von Index-Informationen und/oder von Nutz-Informationen. Bevorzugt beschreibt die Index-Information IX eine Informationskategorie, besonders bevorzugt eine Fehlerart oder eine Herstellerangabe oder eine Hardwareversion oder eine Softwareversion.

Erfindungsgemäß erfolgt das Kodieren durch die Anordnung mindestens einer Nachricht vorbestimmter Art, bevorzugt einer Temperaturnachricht, auf einer Sequenzposition in einer Nachrichtensequenz. Bevorzugt ist die Signalverarbeitungsvorrichtung ausgebildet, sowohl Nachrichtensequenzen in Form von Zeilen-Wechsel-Sequenzen mit einer ersten Nachrichtenanzahl, als auch Nachrichtensequenzen in Form von Zeilen-Zwischen-Sequenzen mit einer zweiten Nachrichtenanzahl bereitzustellen. Besonders bevorzugt ist die Signalverarbeitungsvorrichtung ausgebildet, eine Zeilen-Wechsel-Sequenz, gefolgt von einer Zwischensequenz-Anzahl von Zeilen-Zwischen-Sequenzen bereitzustellen. Bevorzugt ist in der Zeilen-Wechsel-Sequenz eine Index-Information IX kodiert. Bevorzugt ist in der Zeilen-Zwischen-Sequenz eine Nutz-Information IY kodiert.

Bevorzugt ist die zweite Nachrichtenanzahl derart, dass eine Merkmalsanzahl eines zugeordneten rotativen Maßkörpers ganzzahlig durch die zweite Nachrichtenanzahl teilbar ist. Bevorzugt weist eine Nachrichtensequenz eine oder mehrere Sequenzabschnitte auf, wobei jeweils eine Nachricht vorbestimmter Art, bevorzugt eine Temperaturnachricht, an einer Sequenzposition innerhalb des Sequenzabschnitts zwecks Kodierung und/oder Dekodierung angeordnet sein kann. Bevorzugt ist die erste Nachrichtenanzahl von der zweiten Nachrichtenanzahl unterschiedlich, besonders bevorzugt um den Wert 1 größer als die zweite Nachrichtenanzahl.

Bevorzugt ist die Zwischensequenz-Anzahl gleich einer Anzahl von X-1, wobei X der ganzzahlige Quotient aus der Merkmalsanzahl und der zweiten Nachrichtenanzahl ist. Bevorzugt ist pro Nachrichtensequenz, insbesondere pro Zeilen-Wechsel-Sequenz und/oder pro Zeilen-Zwischen-Sequenz, mindestens ein, mehrere Sequenzpositionen umfassender, Sequenzabschnitt vorgesehen, in dem eine Nachricht vorbestimmter Art, insbesondere eine Temperaturnachricht, zwecks Kodierung angeordnet werden kann.

Im Rahmen einer bevorzugten Weiterbildung der Drehmesseinrichtung ist vorgesehen, dass der rotative Maßkörper als Zahnrad ausgebildet ist, insbesondere ein Messmerkmal als jeweils ein Zahnkopf und jeweils ein Zahntal, oder jeweils als eine Zahn-Tal-Paarung aus einem Zahnkopf und einem Zahntal, ausgebildet ist. Vorzugsweise weist der rotative Maßkörper eine Merkmalsanzahl von 60 oder 80 oder 100 oder 120 Messmerkmalen auf. In anderen Weiterbildungen kann die Merkmalsanzahl abweichen.

Vorzugsweise weist die elektronische Signalverarbeitungsvorrichtung oder der Drehmesssensor eine Auswerteeinheit auf, die ausgebildet ist zum Bereitstellen des Datenprotokolls gemäß dem ersten Aspekt der Erfindung in Abhängigkeit einer Messspannung des Drehmesssensors.

Im Rahmen einer bevorzugten Weiterbildung der Drehmesseinrichtung oder des Drehmesssystems ist vorgesehen, dass die Zuordnung in Form eines Wertetupels, auf Basis der Nachrichtenanzahl, vorzugsweise nach einem zugeordneten Datenprotokoll, gegeben ist.

Im Rahmen einer bevorzugten Weiterbildung des Drehmesssystems ist - eine Zuordnungseinheit ausgebildet, eine Nachricht vorbestimmter Art einer Nachrichtensequenz einem Messmerkmal zuzuordnen in Form eines Wertetupels, insbesondere auf Basis der Nachrichtenanzahl. Zur Zuordnung zu einem Messmerkmal kann vorteilhaft jedem Messmerkmal ein Merkmalsindex zugeordnet sein, insbesondere in Form einer ganzzahligen Nummerierung. Vorteilhaft kann das Wertetupel weitere Komponenten umfassen, insbesondere einen Index zur Zuordnung des Wertetupels in einer Tabelle.

Im Rahmen einer bevorzugten Weiterbildung des Drehmesssystems ist ein Zuordnungsspeicher vorgesehen, insbesondere eine Zuordnungstabelle, der ausgebildet ist, für ein oder mehrere Messmerkmale jeweils eine zugeordnete Nachricht vorbestimmter Art, insbesondere das Wertetupel, zu hinterlegen. Der Zuordnungsspeicher kann durch eine Datenbank, einen Flash-Speicher oder dergleichen geeigneten Speichermittel gebildet sein.

Im Rahmen einer bevorzugten Weiterbildung des Drehmesssystems ist eine Diagnoseeinheit vorgesehen, ausgebildet zum Erkennen von einem Fehlerzustand und/oder einem Betriebszustand in Abhängigkeit des mindestens einen, der Nachricht vorbestimmter Art zugeordneten, Messmerkmals, insbesondere in Abhängigkeit des mindestens einen Wertetupels. Die Diagnoseeinheit kann als Softwaremodul, insbesondere in der elektronischen Steuereinheit, oder als Hardwaremodul gebildet sein.

Das Drehmesssystem weist in einer bevorzugten Weiterbildung eine elektronische Steuereinrichtung (ECU) auf, die in einer besonders vorteilhaften Weise im Rahmen einer Rechen- und Datenverarbeitungs-Einrichtung realisiert ist. Die Signalverarbeitungsvorrichtung und/oder die elektronische Steuereinrichtung (ECU) kann vorteilhaft ein Mikro-Controller sein; beispielsweise ein ASIC-Baustein (englisch application-specific integrated circuit, *ASIC,* auch Custom Chip).

Vorteilhaft weist die Signalverarbeitungsvorrichtung und/oder die elektronische Steuereinrichtung (ECU) eine Kommunikations-Schnittstelle auf, beispielsweise eine Antenne oder dergleichen drahtlose Kommunikations-Schnittstelle zum Messwertaufnehmer. Der Messwertaufnehmer des Drehmesssensors ist zur Erfassung von Messmerkmalen dem rotativen Maßkörper zugeordnet, insbesondere zur Erfassung der Messmerkmale in Verbindung mit einer rotierenden Bewegung des rotativen Maßkörpers. Die elektronische Steuereinrichtung kann vorteilhaft eine Zuordnungseinheit und/oder einen Zuordnungsspeicher und/oder eine Diagnoseeinheit umfassen.

Ausführungsformen der Erfindung werden nun nachfolgend anhand der Zeichnung im Vergleich zum Stand der Technik, welcher zum Teil ebenfalls dargestellt ist, beschrieben. Diese soll die Ausführungsformen nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein.

Weitere Vorteile, Merkmale und Einzelheiten der Erfindung ergeben sich aus der nachfolgenden Beschreibung der bevorzugten Ausführungsformen sowie anhand der Zeichnung; diese zeigt in:
- Fig. 1: eine schematisch dargestellte bevorzugte Ausführungsform einer Drehmesseinrichtung gemäß dem zweiten Aspekt der Erfindung, mit einer Signalverarbeitungsvorrichtung gemäß dem ersten Aspekt der Erfindung, die ausgebildet ist zum Bereitstellen aufeinanderfolgender Nachrichtensequenzen gemäß einer Datenfolge
- Fig. 2: ein Datenprotokoll, insbesondere Datenfolge, für bevorzugte Ausführungsformen einer Signalverarbeitungsvorrichtung gemäß dem ersten Aspekt der Erfindung,
- Fig. 3A, Fig. 3B, Fig. 3C, Fig. 3D: jeweils bevorzugte Ausführungsformen eines Datenbelegungsplans als eine mögliche Formen der Bereitstellung von Nachrichtensequenzen,
- Fig. 4: eine weitere mögliche Form der Bereitstellung von Auswahlpositionen mittels Zufallszahlen für eine weitere bevorzugte Ausführungsform einer Signalverarbeitungsvorrichtung
- Fig. 5: eine schematische Darstellung eines bevorzugten Zuordnungsspeichers mit einer Zuordnungstabelle zur Zuordnung einer Nachrichtenanzahl von Statusnachrichten zu jeweils einem Messmerkmal,
- Fig. 6: einen schematischen Aufbau einer Nachricht mit Nachrichtenbits,
- Fig. 7A: eine perspektivische Ansicht einer bevorzugten Ausführungsform einer Drehmesseinrichtung gemäß dem zweiten Aspekt der Erfindung,
- Fig. 7B: eine perspektivische Ansicht eines weiteren bevorzugten, als Kronenrad ausgebildeten rotativen Maßkörpers,
- Fig. 8: eine schematisch dargestellte bevorzugte Ausführungsform eines Fahrzeugs gemäß dem dritten Aspekt der Erfindung, aufweisend ein Drehmesssystem gemäß dem dritten Aspekt der Erfindung.

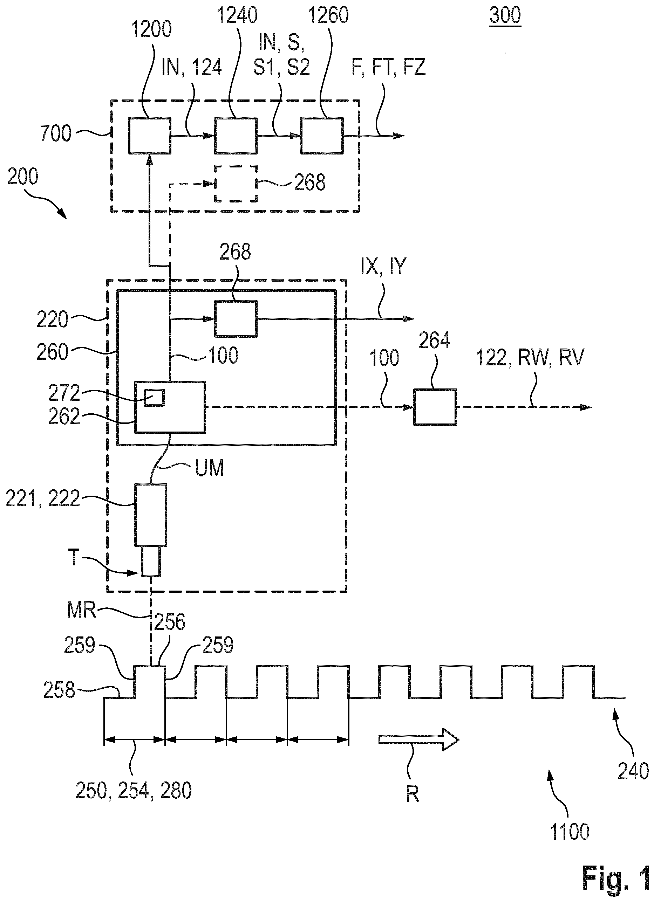

Fig. 1 zeigt eine schematisch dargestellte Ausführungsform eines Drehmesssystems 300 mit einer Drehmesseinrichtung 200. Die Drehmesseinrichtung 200 weist einen Drehmesssensor 220 und einen rotativen Maßkörper 240 auf. Der Drehmesssensor 220 weist vorliegend einen Messwertaufnehmer 221 auf, der als Hall-Sensor 222 ausgebildet ist. Der Hall-Sensor 222 ist in einer Messrichtung MR zum rotativem Maßkörper 240, beispielsweise ein Polrad, ausgerichtet. Der rotative Maßkörper 240 ist drehstarr mit einem rotierenden Teil 1100, beispielsweise einem Rad 540 eines Fahrzeugs 1000, verbunden, um dessen Drehbewegung R zu erfassen. Die an sich bekannte Funktionsweise eines Hall-Sensors 222 ist vereinfacht beschrieben derart, dass in Abhängigkeit des Vorhandenseins eines Messmerkmals 250 im - hier vereinfacht durch die Messrichtung MR beschriebenen - Messfeldes des Hall-Sensors 222 eine induzierte Messspannung UM von dem Hall-Sensor 222 bereitgestellt wird.

Beispielsweise wird bei dem Vorhandensein eines Zahnkopfs 256 an einem Polrad, als bevorzugte Ausführung des rotativen Maßkörpers, eine höhere Messspannung UM bereitgestellt als bei dem Vorhandensein eines Zahntals 258, wobei diese Zuordnung jedoch auch abweichen kann, beispielsweise in Abhängigkeit der Ausrichtung des Hallsensors 222. Es können auch andere Eigenschaften hauptsächlich des Sensors Berücksichtigung finden, beispielsweise vor allem eine Auswahl der Hallelemente des Hallsensors 222.

Vorliegend bilden ein Zahnkopf 256 und ein darauffolgendes Zahntal 258 zusammen eine Zahn-Tal-Paarung 254. Vorliegend bildet eine Zahn-Tal-Paarung 254 ein Messmerkmal 250.

Gleichwohl ist, wie oben erwähnt für eine andere Ausführungsform, eine andere Zuordnung möglich, beispielsweise indem eine jede Zahnflanke 259 ein Messmerkmal 250 bildet. In diesem Fall würden sich innerhalb einer Zahn-Tal-Paarung 254 zwei Messmerkmale 250 ergeben; nämlich ein erstes für eine in Drehrichtung ansteigende Zahnflanke und ein zweites für eine in Drehrichtung abfallende Zahnflanke.

Die Drehmesseinrichtung 200 weist vorliegend weiter eine elektronische Signalverarbeitungsvorrichtung 260 auf, die ausgebildet ist zum Bereitstellen eines Datenprotokolls 100. Die Signalverarbeitungsvorrichtung 260 ist vorliegend im Drehmesssensor 220 integriert und signalführend mit dem Messwertaufnehmer 221 verbunden. In anderen Ausführungsformen kann die Signalverarbeitungsvorrichtung 260, auch in anderen elektronischen Komponenten ausgebildet sein. Die Signalverarbeitungsvorrichtung 260 kann in anderen Ausführungsformen beispielsweise als Hardware- bzw. Software-Modul in einer übergeordneten, insbesondere zentralen, elektronischen Steuereinrichtung 700, beispielsweise einer Fahrzeugsteuereinheit 702, ausgebildet sein. Die Signalverarbeitungsvorrichtung 260 weist vorliegend eine Auswerteeinheit 262 auf. Die Auswerteeinheit 262 kann vorteilhaft wie hier gezeigt eine Identifikationseinheit 272 aufweisen, die ausgebildet ist zum Ermitteln der Nachrichtenart NT jeder Nachricht 120. Bevorzugt ist die Identifikationseinheit 272 ausgebildet, die Nachrichtenart NT anhand mindestens eines Nachrichtenbits 178 einer Nachricht 120, bevorzugt anhand einer Eigenschaftskennung 180 der Nachricht 120, zu ermitteln.

Das Drehmesssystem 300 weist eine Zuordnungseinheit 1200, einen Zuordnungsspeicher 1240 und eine Diagnoseeinheit 1260 auf, die in einer elektronischen Steuereinrichtung 700 angeordnet sind. Die Signalverarbeitungsvorrichtung 260 ist ausgebildet, in Abhängigkeit der Messspannung UM des Hallsensors 222 Informationen gemäß dem Datenprotokoll 100, insbesondere gemäß eines Datenbelegungsplans 1300 oder einer Zufallszahl ZZ, bereitzustellen, und zwar mit einer Nachricht 120 pro Messmerkmal 250, das den Drehmesssensor 220 passiert hat. Die Signalverarbeitungsvorrichtung 260 oder der Drehmesssensor 220 können vorteilhaft zum Bereitstellen eines Zeitstempels für jede Nachricht 120 ausgebildet sein.

Insbesondere wird eine Nachricht 120 unmittelbar nach dem Passieren des korrespondierenden Messmerkmals 250 erzeugt und bei Erreichen der Nachrichtenanzahl A der Nachrichtensequenz 110, d.h. wenn eine der Nachrichtenanzahl A entsprechende Menge an Messmerkmalen 250 den Drehmesssensor 220 passiert hat, wird die Nachrichtenanzahl A von Nachrichten 120 als Nachrichtensequenz 110 bereitgestellt.

Die Zuordnungseinheit 1200 ist ausgebildet, aus dem Datenprotokoll 100 diejenigen Nachrichten 120 zu erfassen, die Nachrichten vorbestimmter Art 123, insbesondere Statusnachrichten 124 sind, und dem jeweiligen Messmerkmal 250 zuzuordnen. Hierfür kann vorteilhaft für jedes Messmerkmal 250 des rotativen Maßkörpers 240 ein Merkmalsindex MIN bzw. eine Nummer vorgesehen werden. Vorteilhaft kann das Wertetupel weitere Komponenten umfassen, insbesondere einen Index IN zur Zuordnung des Wertetupels. Das Wertetupel aus Merkmalsindex MIN, Index IN und Statusnachricht 124 kann vorteilhaft in dem Zuordnungsspeicher 1240, insbesondere mit einer Zuordnungstabelle 1242, hinterlegt werden. Zur Verdeutlichung: bei einer beispielhaften Merkmalsanzahl MA von 80 würde kurz vor Vollendung einer dritten Umdrehung U des rotativen Maßkörpers 240 der Index IN bis 240 (U x MA = 3 x 80) hochgezählt sein. Der Merkmalsindex MIN, der beim Hochzählen nach Erreichen der Merkmalsanzahl MA stets wieder von vorne beginnt, läge entsprechend bei 80 (und würde beim nächsten Messmerkmal zu Beginn der vierten Umdrehung wieder bei 1 starten).

Unabhängig von ihrem Auftretenszeitpunkt, bevorzugt ihres Zeitstempels, übermitteln Nachrichten 120 in ihren sogenannten "words" eine weitere Information, deren Bedeutung aber von der Nachrichtenart abhängt und von der Art des Datenprotokolls. Im Rahmen eines bevorzugten Ausführungsbeispiels kann dies das weiter unten genannte AK-Datenprotokoll oder ein Datenprotokoll im Allgemeinen sein.

So kann in den "words" sogenannter Kanalnachrichten -abhängig von der Art des Datenprotokolls-- eine "channel select" Information übertragen werden. Dies ist eine Eigenschaft hauptsächlich des Sensors und gibt vor allem eine Auswahl der Hallelemente des Hallsensors 222 an, beispielswiese welche zwei von vorliegend insgesamt drei im Sensor enthaltenen Hallelemente verwendet wurden. Diese insofern allgemein mögliche und in der speziellen Ausführung vorzunehmende Auswahl der Hallelemente nimmt der Hallsensor 222 bzw. Drehmesssensor 220 selbstständig vor, und zwar so, dass die erzeugten Spannungen der ausgewählten Hallelemente möglichst ungleichzeitig erfolgen.

Damit ist sichergestellt, dass der Sensor aus der relativen zeitlichen Lage der beiden Hallelementspannungen möglichst gut die Drehrichtung erkennen kann. Dieser vorgenannte "channel select"-Mechanismus ist somit beispielhaft für eine konkrete Ausführung des Konzepts der Erfindung; das Konzept der Erfindung ist insofern allgemeiner zu verstehen und die nachfolgenden Ausführungsformen in Bezug auf eine bestimmte Art eines Hallsensors 222 bzw. Drehmesssensor 220 oder eine bestimmte Art eines Datenprotokolls sind keinesfalls einschränkend für das allgemein zu verstehende Konzept der Erfindung.

Durch das Datenprotokoll bzw. mit Maßgabe einer Datenfolge wird definiert, welche Nachrichtenart NT jeweils gesendet wird bzw. welches die Nachricht vorbestimmter Art gemäß dem allgemeinen Konzept der Erfindung ist. Vorliegend in dem zur erläuternden Ausführungsbeispiel handelt es sich bei der Nachricht vorbestimmter Art 123 um eine Statusnachricht 124 gemäß einem Datenprotokoll 100. Die Nachrichtenart NT der Nachrichten 120 einer Nachrichtensequenz 110 kann von der Signalverarbeitungsvorrichtung 260 oder dergleichen Auswerteeinheit allein anhand der - durch das Datenprotokoll 100 definierten - Reihenfolge klassifiziert werden.

Vorteilhaft kann die Nachrichtenart NT aber auch zusätzlich oder alternativ in der Nachricht 120 codiert sein, beispielsweise in bestimmten Bits des "words" der Nachrichten 120. Die Signalverarbeitungsvorrichtung 260, insbesondere die Identifikationseinheit 272, oder dergleichen Auswerteeinheit 262 kann dann unabhängig von der Reihenfolge die Nachrichtenart identifizieren.

Mittels der Diagnoseeinheit 1260 können auf Basis der in dem Zuordnungsspeicher 1240 hinterlegten Nachrichten vorbestimmter Art 123, insbesondere Statusnachrichten 124, Diagnosefunktionen realisiert werden.

Beispielsweise kann aufgrund einer Anzahl von Peak-to-Peak-Nachrichten 125, die jeweils einem Messmerkmal 250 zuordenbar sind, auf einen Taumelfehler FT des rotativen Maßkörpers 240 und/oder des rotierenden Teils 1100 geschlossen werden. Ein Taumelfehler FT liegt insbesondere vor, wenn der rotative Maßkörper 240 und/oder das rotierende Teil 1100 nicht mehr um eine Rotationsachse AR drehen, sondern eine abweichende Rotationsachse aufweisen. Hierzu können statistische Verfahren wie z.B. Regression, Mittelwertbestimmung und dergleichen angewendet werden. Ebenfalls können, beispielsweise mittels festgelegten oder dynamisch anpassbaren Grenzwerten, Ausreißer zur Identifizierung von Fehlern F der Messmerkmale 250, beispielsweise mechanischen Fehlern in der Zahn-Tal-Paarung 254, ein Zahnfehler FZ, durch die Diagnoseeinheit 1260 bestimmt werden.

Allgemein ist zu verstehen, dass in einer "peak-to-peak" Nachricht ein Maß für die absolute Größe der Spannungsänderungen bei einem Vorbeibewegen des aktuellen Messmerkmals am Sensor übertragen wird. Fehlende oder beschädigte Zähne, oder mit Metallabrieb gefüllte Zahnzwischenräume bewirken bei Vorbeibewegung eine schwächere Magnetfeldänderung und damit geringere Spannungsänderungen (kleinerer peak-to-peak Wert).

Die Drehmesseinrichtung 200 weist weiter einen rotativen Maßkörper 240 auf, der hier lediglich ausschnittsweise und in einem abgerollten Zustand dargestellt ist, in dem der - eigentlich kreisbogenförmige Verlauf - von sich abwechselnden Zahnköpfen 256 und Zahntälern 258 hier gerade verlaufend gezeigt ist. Der rotative Maßkörper 240 ist als Zahnrad 242 ausgebildet mit einer Nachrichtenanzahl A an Messmerkmalen 250, wobei die Messmerkmale 250 vorliegend jeweils als eine Zahn-Tal-Paarung 254 ausgebildet sind. Jeweils ein Zahnkopf 256 und ein benachbartes Zahntal 258 bilden zusammen eine Zahn-Tal-Paarung 254. Ein Messmerkmal 250 kann eine oder mehrere Merkmalseigenschaften 280 aufweisen, die sich in Abmessungen, Temperaturen oder dergleichen Zustandsparameter äußern können. Eine Merkmalseigenschaft 280 ist insbesondere messbar und kann vorteilhaft Rückschluss über den Zustand des Messmerkmals 250 erlauben.

Beispielhaft ist in Fig. 1 noch eine weitere Verarbeitungseinheit 264 dargestellt, welche ebenfalls auf Basis des Datenprotokolls 100 die Daten der Drehmesseinrichtung 200 nutzt bzw. weiterverarbeitet. Insbesondere können auf Basis der Kanalnachrichten 122, vorteilhaft auf Basis der Zeitstempel der Kanalnachrichten 122, positions- und/oder bewegungsbezogene Kenngrößen bestimmt werden wie z.B. eine Winkellage RW, das heißt Drehposition, oder eine Drehgeschwindigkeit RV des rotierenden Teils 1100.

Vorteilhaft kann das Drehmesssystem, wie hier gezeigt im Drehmesssensor 220, oder alternativ in der elektronischen Steuereinrichtung 700, eine Kodierungseinheit 268 aufweisen, die ausgebildet ist zum Kodieren und/oder Dekodieren von Informationen. Das Kodieren und/oder Dekodieren erfolgt dabei vorteilhaft unabhängig vom Inhalt der einzelnen Nachrichten 120, sondern mittels der Anordnung unterschiedlicher Nachrichtenarten NT innerhalb einer oder mehrerer Nachrichtensequenzen 110. Auf diese Weise können Informationen, insbesondere Index-Informationen IX und/oder Nutz-Informationen IY, vom Drehmesssensor 220 kodiert und an anderer Stelle, beispielsweise in der elektronischen Steuereinheit 700, wieder dekodiert werden.

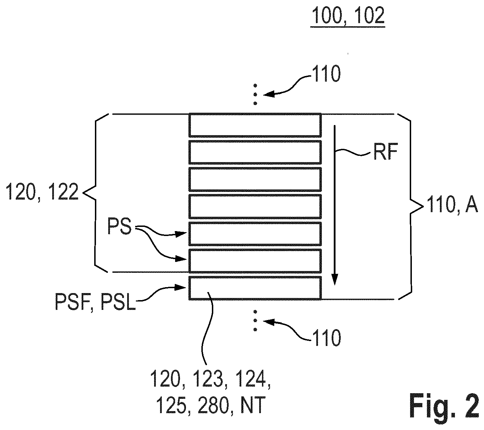

Fig. 2 zeigt schematisch eine bevorzugte Ausführungsform einer Signalverarbeitungsvorrichtung mit Datenprotokoll 100 als zyklische Abfolge von Nachrichtensequenzen 110, von denen eine Nachrichtensequenz 110 detailliert dargestellt ist. Die Nachrichtensequenz 110 des Datenprotokolls 100 weist eine Nachrichtenanzahl A von sieben Nachrichten 120 in einer Reihenfolge RF auf. Jede Nachricht befindet sich an einer Sequenzposition PS, von der hier zwei bespielhaft bezeichnet sind.

Die Nachrichtensequenz 110 weist eine Nachricht vorbestimmter Art 123 in Form einer Statusnachricht 124 auf. Die Statusnachricht 124 befindet sich an einer Auswahlposition PSF für jede Nachrichtensequenz 110. Vorliegend ist die letzte Nachricht 120 einer Nachrichtensequenz 110 als Statusnachricht 124 ausgebildet, d.h. die Auswahlposition PSF befindet sich an einer letzten Sequenzposition PSL der Nachrichtensequenz 110. Die Statusnachricht 124 beschreibt eine Merkmalseigenschaft 280 des ihr zugeordneten Messmerkmals 250.

Vorliegend ist die Nachricht vorbestimmter Art 123 als sogenannte Peak-to-Peak-Nachricht 125 ausgebildet, die in Form eines Zahlenwerts eine Spannungsdifferenz der in den Hall-Sensor induzierten Spannung zwischen der höchsten und der niedrigsten Stelle einer Zahn-Tal-Paarung 254 beschreibt. Die Peak-to-Peak-Nachricht 125 charakterisiert somit einen tatsächlichen Höhenunterschied zwischen einem Zahnkopf 256 und einem Zahntal 258 in einer Messrichtung MR. Mittels der Peak-to-Peak-Nachricht 125 können somit Fehler im rotativen Maßkörper 240, beispielsweise ein beschädigter, insbesondere ausgebrochener, Zahnkopf 256 oder ein zugesetztes Zahntal 258, identifiziert werden. Auch ein Taumeln oder dergleichen kinematischer Fehler des rotativen Maßkörpers 240 kann verbessert erkannt werden, wenn eine Nachricht vorbestimmter Art 123, insbesondere eine Peak-to-Peak-Nachricht 125, für jedes Messmerkmal 250 vorliegt, insbesondere, weil derartige Tendenzen selbst bei einer relativ geringen Messauflösung früher erkannt werden. Eine Nachricht 120, insbesondere eine Kanalnachricht 122 oder eine Nachricht vorbestimmter Art 123 in Form einer Statusnachricht 124, ist vorzugsweise als 3-Bit-Wert ausgebildet, und kann somit einen Wert zwischen 0 und 7 annehmen. In anderen Ausführungsformen kann die Nachricht vorbestimmter Art 123 anders ausgebildet sein, beispielsweise als Temperaturnachricht 126, die eine Temperatur T am Drehmesssensor 220 beschreibt. In anderen Ausführungsformen kann die Nachricht 120 gemäß dem Datenprotokoll 100 anders ausgebildet sein, beispielsweise als 9-Bit-Wert.

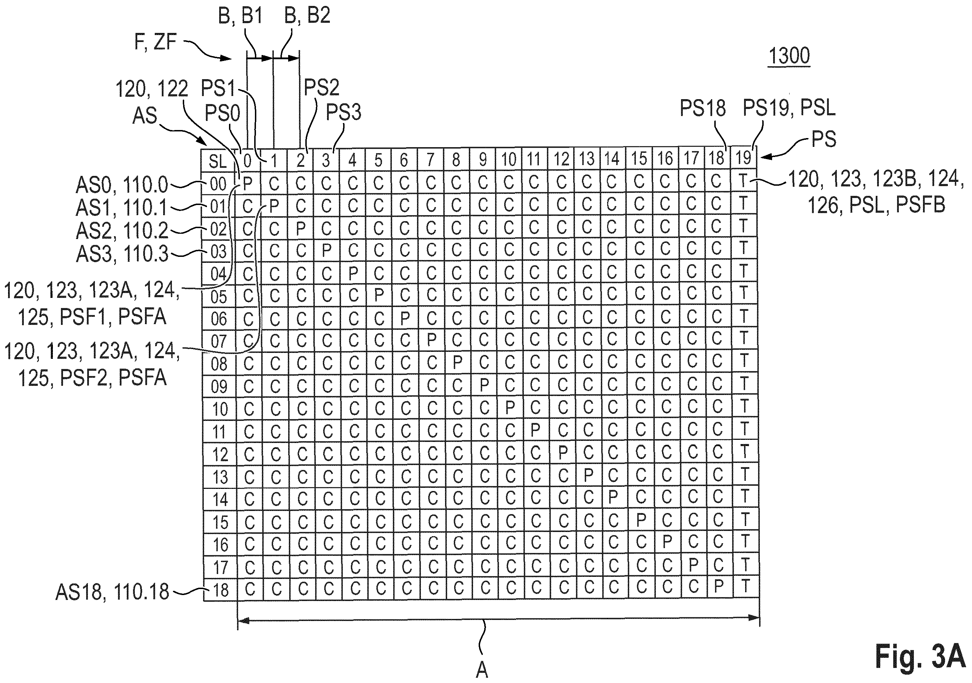

Fig. 3A zeigt eine mögliche Form der Bereitstellung von Auswahlpositionen PSF für eine bevorzugte Ausführungsform einer Signalverarbeitungsvorrichtung 260. Gezeigt ist ein Datenbelegungsplan 1300, auch "schedule" oder "message schedule" genannt, der die Belegung aufeinanderfolgender Nachrichtensequenzen 110 im Hinblick auf die jeweilige Nachrichtenart NT beschreibt. In dem Datenbelegungsplan 1300 sind in den Spalten von links nach rechts aufsteigende Sequenzpositionen PS einer Nachrichtensequenz 110 eingetragen, und in den Zeilen mit ansteigender Sequenzanzahl AS von oben nach unten aufsteigend die Nachrichtensequenzen 110. Gemäß dem in Fig. 3A dargestellten Datenbelegungsplan 1300 umfassen die Nachrichtensequenzen 110 vorteilhaft eine Nachricht vorbestimmter Art 123 ersten Typs 123A, hier in Form einer Peak-to-Peak-Nachricht 125, sowie eine Nachricht vorbestimmter Art 123 zweiten Typs 123B, hier in Form einer Temperaturnachricht 126.

Das Bereitstellen von Auswahlpositionen PSF ersten Typs PSFA erfolgt für jede Nachrichtensequenz 110 gemäß einer Zahlenfolge ZF. Die Zahlenfolge ZF ist derart, dass die Auswahlposition PSF mit jeder aufsteigenden Sequenzanzahl AS um einen ganzzahligen Betrag B verschoben wird, wobei der ganzzahlige Betrag B vorliegend den konstanten Wert 1 hat. Zum Beispiel befindet sich eine erste Auswahlposition PSF1 ersten Typs PSFA bei der ersten Sequenzanzahl AS1 auf der nullten Sequenzposition PS0, das heißt der ersten möglichen Stelle der ersten Nachrichtensequenz 110.1. Bei der darauffolgenden zweiten Sequenzanzahl AS2, das heißt der zweiten Nachrichtensequenz 110.2, wurde die Auswahlposition PSF gemäß der ganzzahligen Zahlenfolge ZF erhöht, sodass eine zweite Auswahlposition PSF2 ersten Typs PSFA nunmehr - um eine Stelle weitergerückt - auf der ersten Sequenzposition PS1 liegt. Auf diese Weise erfolgt vorteilhaft mit fortschreitenden Nachrichtensequenzen 110 eine sich ändernde Belegung der Auswahlposition PSF ersten Typs PSFA und dadurch eine verbesserte Erfassung der Merkmalseigenschaften unterschiedlicher Messmerkmale.

Beim Erreichen der achtzehnten Sequenzposition PS18, hier bei der achtzehnten Nachrichtensequenz 110.18, wird in der darauffolgenden Nachrichtensequenz der Datenbelegungsplan 1300 wieder von vorne verwendet. Somit erfolgt in der darauffolgenden Nachrichtensequenz (hier nicht gezeigt) die Belegung der Auswahlposition PSF ersten Typs PSFA wieder an der nullten Sequenzposition PS0. Bevorzugt beginnt die Zahlenfolge ZF bei Erreichen der Nachrichtenanzahl A, oder wie hier gezeigt aufgrund der Belegung der letzten Sequenzposition PSL bereits schon bei dem Wert A-1 (A minus 1), wieder von vorn.

Das Bereitstellen von Auswahlpositionen PSF zweiten Typs PSFB erfolgt für jede Nachrichtensequenz 110 konstant an der letzten Sequenzposition PSL, vorliegend an der neunzehnten Sequenzposition PS19. Auf diese Weise markiert die Nachricht vorbestimmter Art zweiten Typs 123B vorteilhaft jeweils das Ende einer Nachrichtensequenz 110.

In anderen Ausführungsformen kann die Zahlenfolge Z anders gebildet sein, und beispielsweise durch eine oder mehrere Funktionen gebildet sein, die in Abhängigkeit einer Umdrehungsanzahl US und/oder einer Sequenzanzahl AS einen ganzzahligen Wert für die Auswahlposition PSF bereitstellen.

Indem jede Nachricht 120 vorteilhaft eine Eigenschaftskennung 180 aufweist, kann die Nachrichtenart NT jeder Nachricht 120 von Signalverarbeitungsmitteln, insbesondere der Auswerteeinheit 262, erkannt werden.

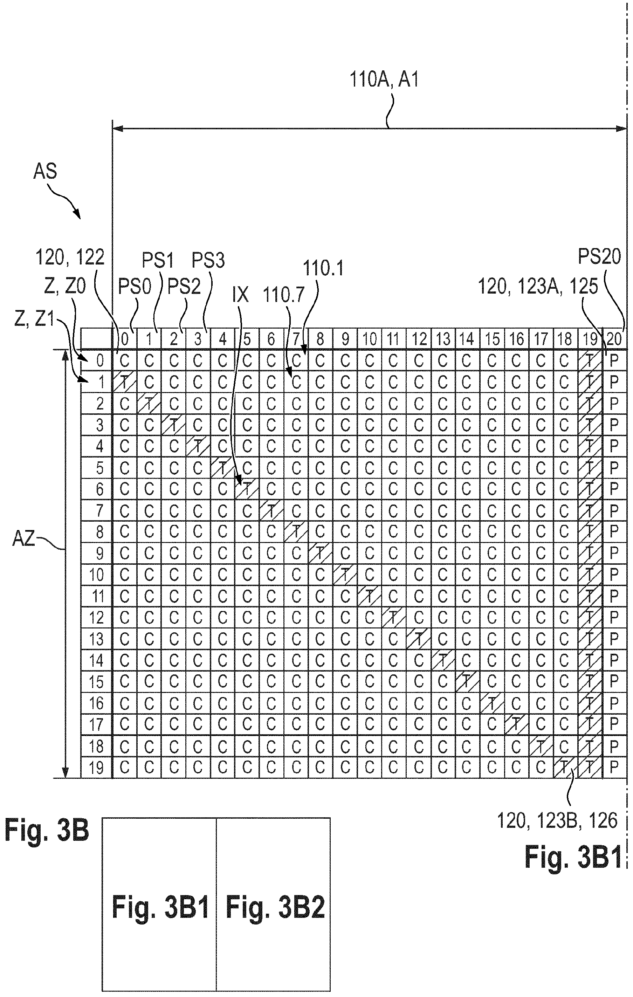

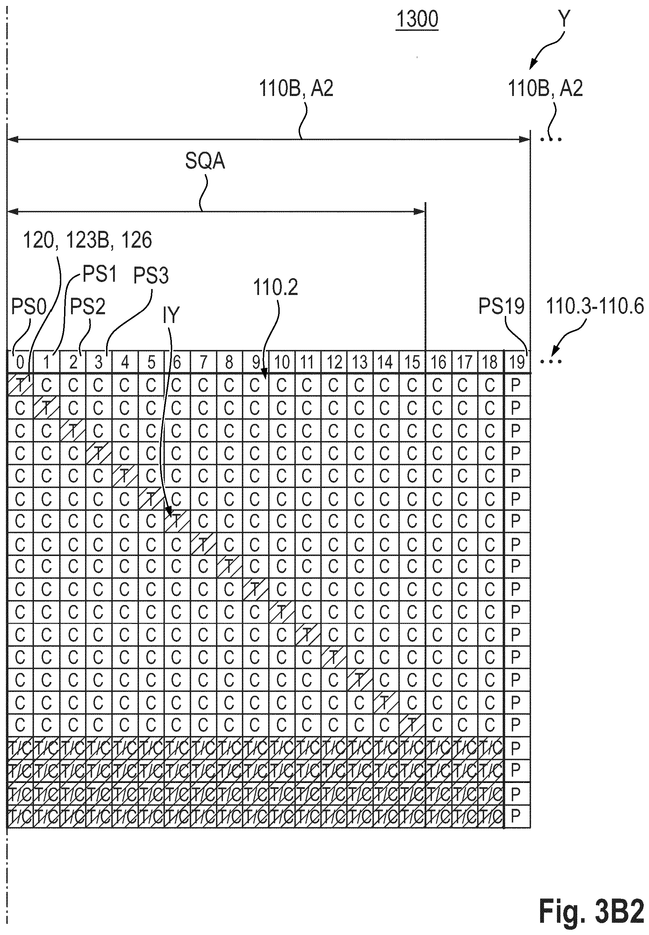

Fig. 3B zeigt eine weitere bevorzugte Ausführungsform eines Datenbelegungsplans 1300, insbesondere für ein Datenprotokoll 100. Dieser Datenbelegungsplan 1300 weist sowohl Nachrichtensequenzen 110 auf, die als Zeilen-Wechsel-Sequenz 110A ausgebildet sind, als auch Nachrichtensequenzen 110, die als Zeilen-Zwischen-Sequenz 110B ausgebildet sind.

Bevorzugt weist eine Zeilen-Zwischen-Sequenz 110B eine zweite Nachrichtenanzahl A2 auf, wobei eine Merkmalsanzahl MA eines zugeordneten Maßkörpers 240 ganzzahlig durch die zweite Nachrichtenanzahl A2 teilbar ist. Beispielsweise beträgt bei einer Merkmalsanzahl von 120 die zweite Nachrichtenanzahl A2 wie hier gezeigt 20. Bevorzugt weist eine Zeilen-Wechsel-Sequenz 110A eine erste Nachrichtenanzahl A1 auf, die um den Wert 1 größer ist als die zweite Nachrichtenanzahl A2. Folglich beträgt die erste Nachrichtenanzahl A1 in diesem Beispiel den Wert 21. Der Datenbelegungsplan 1300 ist bevorzugt derart ausgebildet, dass auf eine Zeilen-Wechsel-Sequenz 110A eine Zwischensequenz-Anzahl Y von X-1 Zeilen-Zwischen-Sequenzen 110B folgen, wobei X der Quotient aus der Merkmalsanzahl AM und der zweiten Nachrichtenanzahl A2 ist. Folglich ist hier der Quotient X gleich 6 und somit die Zwischensequenz-Anzahl Y gleich 5. Nach der letzten, fünften Zeilen-Zwischen-Sequenz 110B, die die sechste Nachrichtensequenz 110.6 ist, ist die nullte Zeile Z0 beendet und die erste Zeile Z1 beginnt mit einer als Zeilen Wechsel-Sequenz 110A ausgebildeten, siebten Nachrichtensequenz 110.7. Die Abfolge von einer Zeilen-Wechsel-Sequenz 110A und der Zwischensequenz-Anzahl Y von X-1 Zeilen-Zwischen-Sequenzen 110B wird gemäß dem Datenbelegungsplan 1300 wiederholt, bis die Zeilenanzahl AZ erreicht ist.

Gemäß der gezeigten Ausführungsform führt die Zeilen-Wechsel-Sequenz 110 aufgrund ihrer - von der zweiten Nachrichtenanzahl A2 unterschiedlichen - ersten Nachrichtenanzahl A1 dazu, dass die Zuordnung zwischen Messmerkmalen 260 und Nachrichten 120, insbesondere Nachrichten vorbestimmter Art 123, mit jeder Zeile Z wechselt.

Vorliegend sind Peak-to-Peak-Nachrichten 125, als Nachricht vorbestimmter Art ersten Typs 123A, stets an der letzten Sequenzposition PS einer Zeilen-Wechsel-Sequenz 110A bzw. einer Zeilen-Zwischen-Sequenz 110B, also hier PS20 bzw. PS19, angeordnet. Gemäß der gezeigten Ausführungsform kann weiter vorteilhaft mindestens eine Nachrichtenart NT verwendet werden, um mittels einer individuellen Anordnung der Nachrichten vorbestimmter Art 123 zusätzliche Informationen zu kodieren. Vorliegend sind hierzu Temperaturnachrichten 126, als Nachrichten vorbestimmter Art zweiten Typs 123B, individuell an unterschiedlichen Sequenzpositionen PS angeordnet.

Durch die Anordnung der Nachrichten vorbestimmter Art zweiten Typs 123B an entsprechenden Auswahlpositionen PSF können somit - unabhängig vom Inhalt der jeweiligen Nachrichten 120 - Informationen kodiert werden. Dadurch, dass die Nachrichtenart NT jeder Nachricht 120 anhand ihrer Eigenschaftskennung 180 von der Auswerteeinheit 262 oder dergleichen Auswertelektronik ermittelt werden kann, können durch Muster von Kanalnachrichten 122 und Nachrichten vorbestimmter Art 123, Informationen kodiert werden. Bei dem in Fig. 3B gezeigten Beispiel weist jede Zeilen-Zwischen-Sequenz 110B jeweils eine Temperaturnachricht 126 auf. Durch eine Anordnung der Temperaturnachricht 126 auf einer Sequenzposition PS in einem festgelegten Sequenzabschnitt SQA, der sich von der nullten Sequenzposition PS0 bis zur fünfzehnten Sequenzposition PS15 erstreckt, stehen beispielsweise 16 Möglichkeiten zur Anordnung zur Verfügung. Somit können pro Zeilen-Wechsel-Sequenz 110B 4 Bit (2^4) kodiert werden.

In analoger Weise können durch die Anordnung von Temperaturnachrichten 126 in den Zeilen-Wechsel-Sequenzen 110A Informationen kodiert werden. Es hat sich als vorteilhaft erwiesen, die in den Zeilen-Wechsel-Sequenzen 110A kodierten Informationen als Index-Information IX für die darauffolgenden, in den Zeilen-Zwischen-Sequenzen 110B kodierten Nutz-Informationen IY, zu verwenden. Mittels einer Index-Information IX kann bevorzugt eine Informationskategorie gekennzeichnet werden, beispielsweise eine Fehlerart oder eine Herstellerangabe oder eine Hardwareversion oder eine Softwareversion. Mittels der anschließenden Nutz-Information IY kann dann der Inhalt der durch die Index-Information IX gekennzeichneten Information angegeben werden, insbesondere durch einen kodierten Zahlenwert.

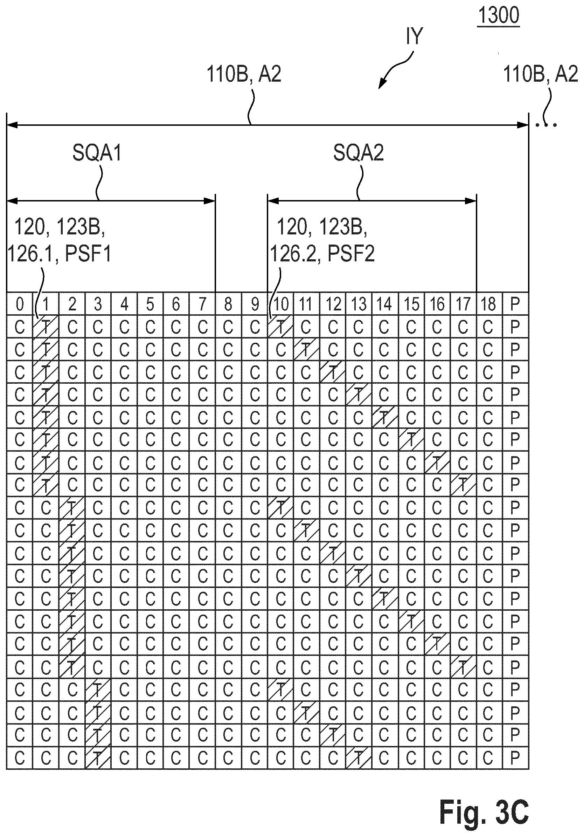

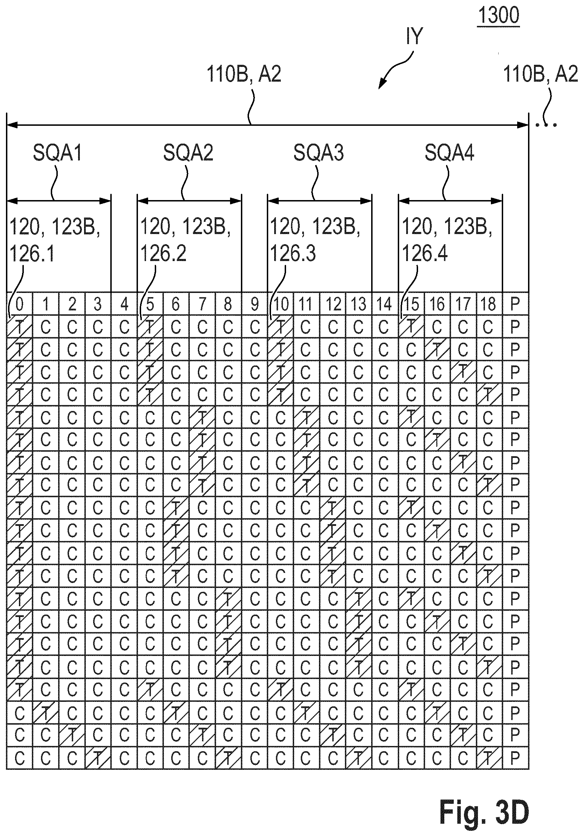

Fig. 3C und Fig. 3D zeigen ausschnittsweise jeweils eine weitere bevorzugte Ausführungsform eines Datenbelegungsplans 1300, wobei jeweils ausschnittsweise Zeilen-Zwischen-Sequenzen 110B dargestellt sind. Die gezeigten Ausführungsformen geben jeweils weitere Möglichkeiten zur Kodierung von Informationen an, bevorzugt von Nutz-Informationen IY. In Fig. 3C weist jede Zeilen-Zwischen-Sequenz 110B zwei Nachrichten vorbestimmter Art zweiten Typs 123B auf, nämlich vorliegend eine erste Temperaturnachricht 126.1 und eine zweite Temperaturnachricht 126.2.

Im Vergleich zu den in Fig. 3B dargestellten Zeilen-Zwischen-Sequenzen 110B kann in der in Fig. 3C dargestellten Ausführungsform vorteilhaft die Datendichte erhöht werden. Vorteilhaft können, indem in jeder Zeilen-Zwischen-Sequenz 110B in zwei, jeweils 8 Sequenzpositionen PS umfassende Sequenzabschnitte SQA1, SQA2 vorgesehen werden, in der jeweils eine Nachricht vorbestimmter Art zweiten Typs 123B angeordnet werden kann. Auf diese Weise kann zweimal eine Zahl zwischen 0 und 7 kodiert werden, wodurch pro Zeilen-Zwischen-Sequenz 110B zweimal 3 Bit (2^3), das heißt 6 Bit, kodiert werden können.

In der in Fig. 3D dargestellten Ausführungsform des Datenbelegungsplans 1300 kann die Datendichte der kodierten Nutz-Informationen IY vorteilhaft weiter erhöht werden. In Fig. 3D weist jede Zeilen-Zwischen-Sequenz 110B vier Nachrichten vorbestimmter Art zweiten Typs 123B auf, nämlich vorliegend eine erste bis vierte Temperaturnachricht 126.1, 126.2,126.3, 126.4. In jeder Zeilen-Zwischen-Sequenz 110B können vorteilhaft vier, jeweils vier Sequenzpositionen PS umfassende Sequenzabschnitte SQA1, SQA2, SQA3, SQA4, vorgesehen werden, wobei in jedem Sequenzabschnitt eine Nachricht vorbestimmter Art zweiten Typs 123B angeordnet werden kann. Auf diese Weise kann viermal eine Zahl zwischen 0 und 3 kodiert werden, wodurch pro Zeilen-Zwischen-Sequenz 110B viermal 2 Bit, das heißt 8 Bit, kodiert werden können.

Durch die Festlegung einer zweiten Nachrichtenanzahl A2 einer geeigneten Anzahl und Länge von Sequenzabschnitten SQA kann vorteilhaft der Umfang und die Datendichte der kodierten Nutz-Informationen IY bestimmt werden. In analoger Weise kann durch die Festlegung einer ersten Nachrichtenanzahl A1 einer geeigneten Anzahl und Länge von Sequenzabschnitten SQA vorteilhaft der Umfang und die Datendichte der kodierten Index-Informationen IX bestimmt werden. Je nach Umfang bzw. Datendichte können Informationen in Form von Zahlen, beispielsweise ganzzahlige Codes oder Zahlenwerte, oder auch in Textform, kodiert und dekodiert werden.

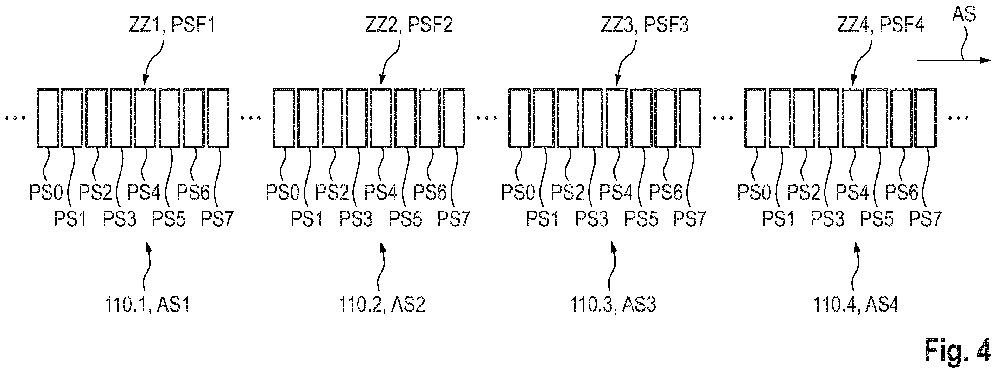

Fig. 4 zeigt eine weitere mögliche Form der Bereitstellung von Auswahlpositionen PSF für eine weitere bevorzugte Ausführungsform einer Signalverarbeitungsvorrichtung 260. Gemäß dieser Ausführungsform erfolgt das Bereitstellen für jede Nachrichtensequenz 110 gemäß einer zufällig erzeugten Zufallszahl ZZ. Die Zufallszahl ZZ kann einen ganzzahligen Wert innerhalb eines festgelegten Zahlenbereichs annehmen. Vorteilhaft ist der Zahlenbereich durch die Nachrichtenanzahl A festgelegt. Auch kann der Zahlenbereich in anderen Ausführungsformen (hier nicht gezeigt) angepasst sein, beispielsweise wie in der vorher beschriebenen Ausführungsform durch die um den Wert 1 verringerte Nachrichtenanzahl A gebildet sein, um eine Nachricht vorbestimmter Art zweiten Typs 123B mit einer konstanten Auswahlposition PSF in der Nachrichtensequenz 110 unterzubringen.

Vorliegend sind beispielhaft vier Nachrichtensequenzen 110.1, 110.2, 110.3, 110.4 gezeigt, die jeweils eine zufällig per Zufallszahl ZZ1, ZZ2, ZZ3, ZZ4 festgelegte Auswahlposition PSF1, PSF2, PSF3, PSF4 für eine Nachricht vorbestimmter Art 123 aufweisen. Die hier gezeigte Ausführungsform kann vorteilhaft derart abgewandelt werden, dass sie sowohl eine Nachricht vorbestimmter Art ersten Typs 123A als auch zweiten Typs 123B bereitstellt, wobei die Nachricht vorbestimmter Art ersten Typs 123A eine per Zufallszahl ZZ bestimmte Auswahlposition PSF hat und die Nachricht vorbestimmter Art zweiten Typs 123B eine konstante Auswahlposition PSF, analog zu der in Fig. 3A gezeigten Ausführungsform.

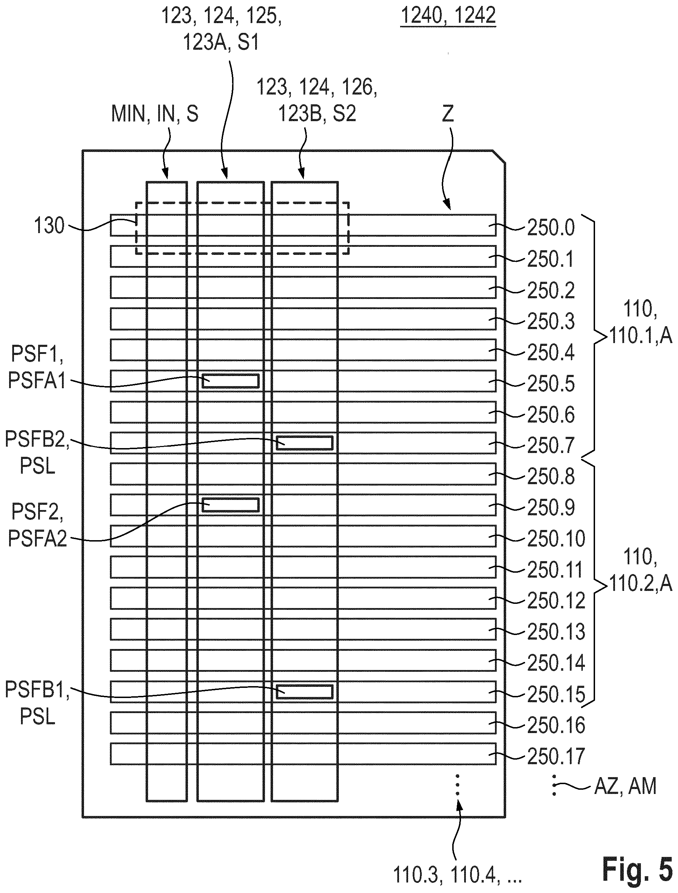

Fig. 5 zeigt schematisch einen Zuordnungsspeicher 1240 mit einer Zuordnungstabelle 1242. Die Zuordnungstabelle 1242 beschreibt dabei insbesondere die Struktur einer Datenbank oder eines Speichers, nach der die von der Drehmesseinrichtung 200 gemäß dem Datenprotokoll 100 bereitgestellten Nachrichten 120 gespeichert werden und abrufbar sind. Ein Zuordnungsspeicher 1240 ist insbesondere zum Speichern von Nachrichten vorbestimmter Art 123 ausgebildet, und ermöglicht auf diese Weise ein Messzyklus-übergreifendes Vorhalten der Nachrichten vorbestimmter Art 123, insbesondere zu Analyse- und Diagnosezwecken. Ein Messzyklus im Sinne dieser Beschreibung beinhaltet das Bereitstellen einer einzelnen Nachrichtensequenz 110.

Vorliegend weist die Zuordnungstabelle 1242 eine Zeilenanzahl AZ von Zeilen Z auf, die der Merkmalsanzahl AM entspricht. Somit ist eine Zuordnung von Werten, insbesondere von Statusnachrichten 124, zu einem individuellen Messmerkmal 250 möglich. Insbesondere ist jede Zeile Z mit einem Merkmalsindex MIN nummeriert zur Zuordnung zu einem Messmerkmal 250. Vorliegend sind beispielhaft die ersten fünfzehn Zeilen Z für die ersten fünfzehn Messmerkmale 250.1 bis 250.15 dargestellt. Beispielhaft ist hier der Zuordnungsspeicher 1240 und die Zuordnungstabelle 1242 für die in Fig. 2 gezeigte Ausführungsform eines Datenprotokolls 100 dargestellt mit einer ersten Nachrichtensequenz 110.1 und einer darauffolgenden zweiten Nachrichtensequenz 110.2. Die ersten sieben Zeilen sind dabei einer ersten Nachrichtensequenz 110.1 zuzuordnen, die folgenden sieben Zeilen einer zweiten Nachrichtensequenz 110.2. Die fünfzehnte, dem Messmerkmal 250.16 zugeordnete Zeile bildet somit den Anfang, das heißt die erste Nachricht, einer dritten Nachrichtensequenz 110.3. Für jede Nachrichtenart NT von Nachrichten vorbestimmter Art 123 kann eine Spalte S in der Zuordnungstabelle 1242 vorgesehen werden, vorliegend ist dies eine erste Spalte S1 für die als Peak-to-Peak-Nachricht 125 ausgebildete Nachricht vorbestimmter Art ersten Typs 123A, und eine zweite Spalte S2 für die als Temperaturnachricht 126 ausgebildete Nachricht vorbestimmter Art zweiten Typs 123B. Einem Betrieb der Drehmesseinrichtung 200 werden somit nach und nach, insbesondere von einer Zuordnungseinheit 1200, die Nachrichten vorbestimmter Art 123 gemäß ihrer Nachrichtenart NT in der entsprechenden Spalte S1, S2 hinterlegt. Insbesondere werden bei dem Hinterlegen die Kanalnachrichten 122 nicht betrachtet. Mit jedem Messzyklus, das heißt mit jeder Nachrichtensequenz 110, wird somit mindestens ein weiterer Wert einer Nachricht vorbestimmter Art 123 in die Zuordnungstabelle 1242 aufgenommen. Alternativ oder zusätzlich kann die Zeilenanzahl AZ eine andere Zahl sein, die unterschiedlich ist von der Merkmalsanzahl AM. Alternativ oder zusätzlich zum Merkmalsindex MIN kann jede Zeile Z einen Index IN aufweisen zur Zuordnung jeder Zeile Z in der Zuordnungstabelle 1242. Vorteilhaft ist in jeder Zeile Z ein Wertetupel 130 hinterlegt.

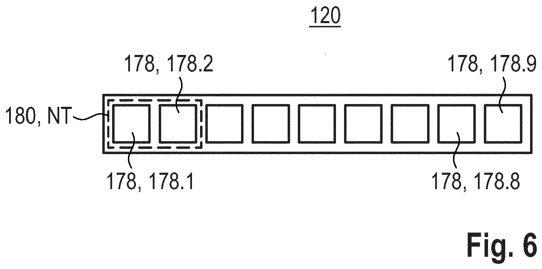

Fig. 6 zeigt schematisch einen vorteilhaften Aufbau einer Nachricht 120. Eine Nachricht 120 ist vorteilhaft durch eine Anzahl von Nachrichtenbits 178 aufgebaut. Bevorzugt weist jede Nachricht 120 dieselbe Struktur, insbesondere dieselbe Anzahl von Nachrichtenbits 178 auf. Vorliegend weist die Nachricht 120 eine Anzahl von neun Nachrichtenbits 178 auf, die entsprechend von einem ersten Nachrichtenbit 178.1 bis zu einem neunten Nachrichtenbit 178.9 nummeriert sind. Es handelt sich somit um eine 9-Bit-Nachricht. Bei der hier gezeigten Nachricht 120 bilden vorteilhaft das erste Nachrichtenbit 178.1 und das zweite Nachrichtenbit 178.2 eine Eigenschaftskennung 180, mittels der vorteilhaft die Nachrichtenart NT einer Nachricht 120 gekennzeichnet werden kann. Auf diese Weise kann mittels der Eigenschaftskennung 180 vorteilhaft angegeben werden, ob es sich bei der Nachricht 120 um eine Kanalnachricht 122, oder eine Nachricht vorbestimmter Art 123, wie z.B. eine Peak-to-Peak-Nachricht 125 oder Temperaturnachricht 126, handelt. In anderen Ausführungsformen von Signalverarbeitungsvorrichtungen 260 kann der Aufbau einer Nachricht 120 anders ausgebildet sein, insbesondere mehr oder weniger Nachrichtenbits 178 aufweisen, oder eine Eigenschaftskennung 180 an einer anderen Stelle der Nachricht 120 aufweisen.

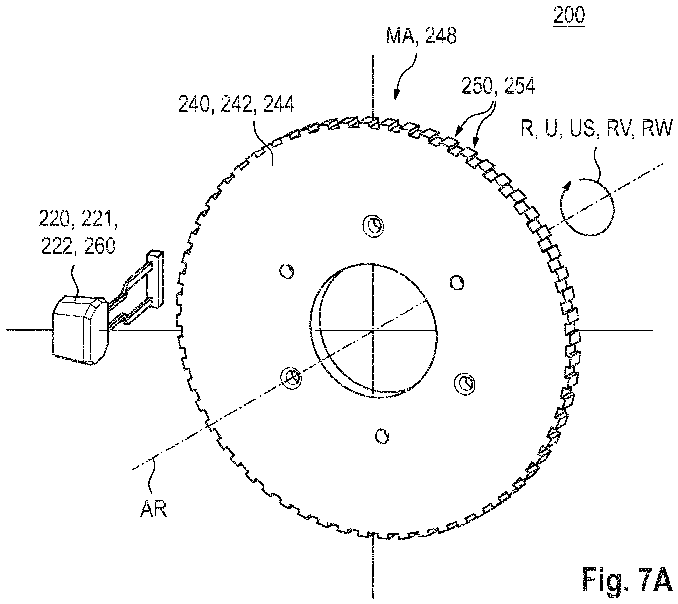

Fig. 7A zeigt in einer perspektivischen Ansicht eine Drehmesseinrichtung 200 gemäß dem zweiten Aspekt der Erfindung. Der rotative Maßkörper 240 ist als Zahnrad 242 in Form eines Stirnrads 244 ausgebildet, das eine Merkmalsanzahl AM von Messmerkmalen 250 aufweist, die als Zahn-Tal-Paarung 254 ausgebildet sind und äquidistant entlang einer Kreisbahn 248 auf dem Zahnrad 242 angeordnet sind. Der rotative Maßkörper 240 ist insbesondere drehstarr mit einem hier nicht dargestellten rotierenden Teil 1100 verbunden, um eine Drehbewegung R des rotativen Maßkörpers 240 - und somit des rotierenden Teils 1100 - messtechnisch zu erfassen. Je größer die Merkmalsanzahl A ist, desto kleiner sind die messtechnisch erfassbaren Abschnitte des rotativen Maßkörpers 240. Eine Umdrehung U entspricht dabei einer Bewegung des rotativen Maßkörpers 240 um 360° um die Rotationsachse AR. Bei einer Merkmalsanzahl MA von 60 erstreckt sich somit ein Messmerkmal 250 über ein Kreissegment von 6°. Je größer die Merkmalsanzahl MA ist, desto genauer kann die Drehbewegung R, insbesondere eine Drehgeschwindigkeit RV oder Winkellage RW, erfasst werden. Ein Zahnrad 242 im Sinne der Erfindung umfasst jegliche Körper mit insbesondere rotationssymmetrischem Grundkörper und einer Anzahl von geometrischen Merkmalen, welche den Abstand zu einem Drehmesssensor 220 in Bezug auf die Messrichtung MR bei einer Drehbewegung R variieren. Hierbei reicht es zum Zwecke der Messung insbesondere aus, wenn ein Zahnkopf rechteckig ausgebildet ist, das heißt wie hier in Fig. 7A gezeigt in tangentialer Richtung senkrecht ansteigend und abfallend ist. Der Drehmesssensor 220 umfasst einen Messwertaufnehmer 221 in Form eines Hall-Sensors 222. Der Drehmesssensor 220 umfasst in der hier gezeigten bevorzugten Ausführungsform vorteilhaft die Signalverarbeitungsvorrichtung 260.

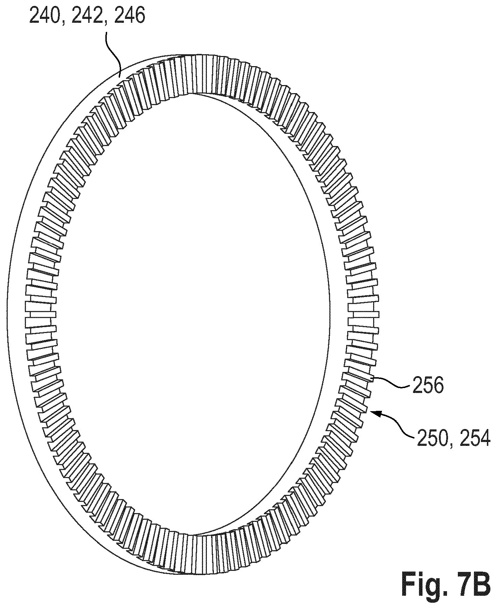

Auch sind andere Formen von Zahnrädern 242 möglich, beispielsweise ein Kronenrad 246 mit in axialer Richtung ausgebildeten Zahnköpfen 256, wie hier beispielhaft in Fig. 7B gezeigt.

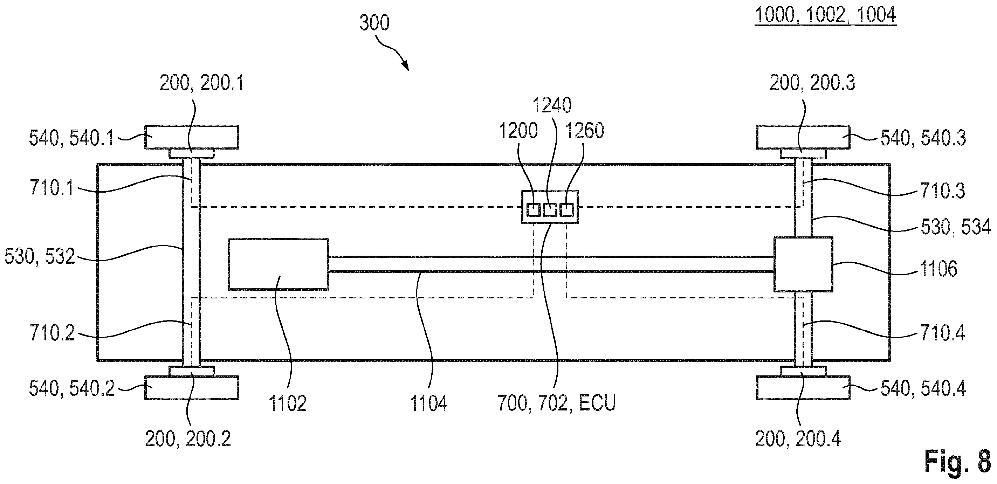

Fig. 8 zeigt stark schematisch ein Fahrzeug 1000 mit einem Drehmesssystem 300 mit einer Anzahl von vier Drehmesseinrichtungen 200 gemäß dem zweiten Aspekt der Erfindung. Das Fahrzeug 1000 kann, wie hier gezeigt, als PKW 1002 ausgebildet sein. In anderen Ausführungsformen kann das Fahrzeug 1000 anders ausgebildet sein, beispielsweise als Nutzfahrzeug 1004. Das Fahrzeug weist zwei Achsen 530, nämlich einem Vorderachse 532 und einer Hinterachse 534 auf. Die Hinterachse 534 wird von einem Antrieb 1102 über eine Antriebswelle 1104 und ein Differential 1106 angetrieben. An jeder Achse 530 sind zwei Räder 540 befestigt. An der Vorderachse 532 sind ein erstes Rad 540.1 mit einer ersten Drehmesseinrichtung 200.1 und ein zweites Rad 540.2 mit einer zweiten Drehmesseinrichtung 200.2, an der Hinterachse 534 ein drittes Rad 540.3 mit einer dritten Drehmesseinrichtung 200.3 und ein viertes Rad 540.4 mit einer vierten Drehmesseinrichtung 200.4 angeordnet. Das jeweilige Rad 540 stellt somit das rotierende Teil 1100 für die zugeordnete Drehmesseinrichtung 200 dar. Die erste Drehmesseinrichtung 200.1 ist mittels einer ersten Drehmess-Signalleitung 710.1 mit einer elektronischen Steuereinrichtung 700 in Form einer Fahrzeugsteuereinheit 702 signalführend verbunden. Die elektronische Steuereinrichtung 700 weist eine Zuordnungseinheit 1200, einen Zuordnungsspeicher 1240 und eine Diagnoseeinheit 1260 auf. In analoger Weise sind die übrigen Drehmesseinrichtungen 200.2, 200.3, 200.4 jeweils über eine Drehmess-Signalleitung 710.2, 710.3, 710.4 mit der elektronischen Steuereinrichtung 700 signalführend verbunden. In Ausführungsformen kann die elektronische Signalverarbeitungsvorrichtung 260 oder die Zuordnungseinheit 1200, der Zuordnungsspeicher 1240 oder die Diagnoseeinheit 1260, als Hardware- oder Software-Modul in einer anderen elektronischen Steuereinheit angeordnet sein.

### BEZUGSZEICHENLISTE (TEIL DER BESCHREIBUNG)

- 100: Datenprotokoll
- 110: Nachrichtensequenz
- 110.0- 110.18: nullte bis achtzehnte Nachrichtensequenz
- 110A: Zeilen-Wechsel-Sequenz
- 110B: Zeilen-Zwischen-Sequenz
- 120: Nachricht
- 122: Kanalnachricht
- 123: Nachricht vorbestimmter Art
- 123A: Nachricht vorbestimmter Art ersten Typs
- 123B: Nachricht vorbestimmter Art zweiten Typs
- 124: Statusnachricht
- 125: Peak-to-Peak-Nachricht
- 126: Temperaturnachricht
- 130: Wertetupel
- 178: Nachrichtenbit
- 178.1 - 178.9: erstes bis neuntes Nachrichtenbit
- 180: Eigenschaftskennung
- 200: Drehmesseinrichtung
- 220: Drehmesssensor
- 221: Messwertaufnehmer
- 222: Hall-Sensor
- 240: rotativer Maßkörper
- 242: Zahnrad
- 244: Stirnrad
- 246: Kronenrad
- 248: Kreisbahn
- 250: Messmerkmal
- 254: Zahn-Tal-Paarung
- 256: Zahnkopf
- 258: Zahntal
- 259: Zahnflanke
- 260: Signalverarbeitungsvorrichtung
- 262: Auswerteeinheit
- 264: weitere Verarbeitungseinheit
- 268: Kodierungseinheit
- 272: Identifikationseinheit
- 280: Merkmalseigenschaft
- 200.1 - 200.4: erste bis vierte Drehmesseinrichtung
- 250.1 - 250.17: erstes bis siebzehntes Messmerkmal
- 300: Drehmesssystem
- 530: Achse
- 532: Vorderachse
- 534: Hinterachse
- 540: Rad
- 540.1 - 540.4: erstes bis viertes Rad
- 700: elektronische Steuereinrichtung
- 702: Fahrzeugsteuereinheit
- 710.1 - 710.4: erste bis vierte Drehmess-Signalleitung
- 1000: Fahrzeug
- 1002: PKW
- 1004: Nutzfahrzeug
- 1100: rotierendes Teil
- 1102: Antrieb
- 1104: Antriebswelle
- 1106: Differential1200 Zuordnungseinheit
- 1240: Zuordnungsspeicher
- 1242: Zuordnungstabelle
- 1260: Diagnoseeinheit
- 1300: Datenbelegungsplan
- A: Nachrichtenanzahl
- A1: erste Nachrichtenanzahl, Nachrichtenanzahl der Zeilen-Wechsel-Sequenz
- A2: zweite Nachrichtenanzahl, Nachrichtenanzahl der Zeilen-Zwischen-Sequenz
- AM: Merkmalsanzahl
- AR: Rotationsachse
- AS: Sequenzanzahl
- AZ: Zeilenanzahl
- B: Betrag
- F: Fehler
- FT: Taumelfehler
- FZ: Zahnfehler
- IN: Index
- IX: Index-Information
- IY: Nutz-Information
- MA: Merkmalsanzahl
- MIN: Merkmalsindex
- MR: Messrichtung
- NT: Nachrichtenart
- PS: Sequenzposition
- PSF: Auswahlposition
- PSFA: Nachricht vorbestimmter Art ersten Typs
- PSFB: Nachricht vorbestimmter Art zweiten Typs
- PSL: letzte Sequenzposition
- R: Drehbewegung
- RF: Reihenfolge
- RV: Drehgeschwindigkeit
- RW: Winkellage
- S: Spalte
- SQA: Sequenzabschnitt
- SQA1-4: erster bis vierter Sequenzabschnitt
- U: Umdrehungen
- UM: Messspannung
- US: Umdrehungsanzahl
- X: Quotient aus Merkmalsanzahl und zweiter Nachrichtenanzahl
- Y: Zwischensequenz-Anzahl
- ZF: Zahlenfolge
- ZZ: Zufallszahl

## Patentansprüche

1. Signalverarbeitungsvorrichtung (260) für eine Drehmesseinrichtung (200), bevorzugt für ein Fahrzeug (1000), mit einem Drehmesssensor (220) und einem rotativen Maßkörper (240), wobei der rotative Maßkörper (240) eine Merkmalsanzahl (AM) von Messmerkmalen (250) aufweist, wobei
- die Signalverarbeitungsvorrichtung (260) ausgebildet ist, zeitlich aufeinanderfolgende Nachrichtensequenzen (110) zur Verfügung zu stellen, und
- eine Nachrichtensequenz (110) eine Nachrichtenanzahl (A) von aufeinanderfolgenden Nachrichten (120) aufweist, derart, dass
- zeitlich aufeinanderfolgende Nachrichten (120) örtlich benachbarten Messmerkmalen (250) zeitlich nacheinander zugeordnet sind, wobei die Messmerkmale (250) mit dem Drehmesssensor (220) wechselwirken, und jede Nachricht (120) in einer aus einer vorbestimmten Anzahl von Nachrichtenarten ausgewählten Nachrichtenart (NT, C, T, P) zur Verfügung gestellt wird, und
- eine an einer Auswahlposition (PSF) der Nachrichtensequenz (110) angeordnete Nachricht (120) eine Nachricht vorbestimmter Art (123) ist, welche eine Merkmalseigenschaft (280) des zugeordneten Messmerkmals (250) beschreibt,
wobei
- die aufeinanderfolgenden Nachrichtensequenzen (110) eine erste und eine zweite Nachrichtensequenz (110.1, 110.2) aufweisen,
- die Signalverarbeitungsvorrichtung (260) ausgebildet ist, für die Nachrichtensequenz (110) die Auswahlposition (PSF) auszuwählen, derart, dass
- für die erste Nachrichtensequenz (110.1) eine erste Auswahlposition (PSF1) für eine erste Nachricht vorbestimmter Art (123.1) bereitgestellt wird, und für die zweite Nachrichtensequenz (110.2) eine zweite Auswahlposition (PSF2) für eine zweite Nachricht der gleichen vorbestimmten Art (123.2) bereitgestellt wird,
**dadurch gekennzeichnet, dass** die Signalverarbeitungsvorrichtung (260) weiterhin aufweist:
- eine Kodierungseinheit (268), die ausgebildet ist zum Kodieren und/oder Dekodieren von Index-Informationen (IX) und/oder von Nutz-Informationen (IY), wobei
- das Kodieren durch die Anordnung mindestens einer Nachricht vorbestimmter Art (123), bevorzugt einer Temperaturnachricht (126), auf einer Sequenzposition (PS) in einer Nachrichtensequenz (110) erfolgt.

2. Signalverarbeitungsvorrichtung (260) nach Anspruch 1, **dadurch gekennzeichnet, dass**
- sie ausgebildet ist, für jede Nachrichtensequenz (110, 110.1, 110.2) eine Auswahlposition (PSF, PSF1, PSF2) auszuwählen.

3. Signalverarbeitungsvorrichtung (260) nach Anspruch 1 oder 2, **dadurch gekennzeichnet, dass**
- die Nachricht vorbestimmter Art (123) eine Statusnachricht (124) ist, insbesondere eine Peak-to-Peak-Nachricht (125), die eine Amplitude einer lokalen Messsignaländerung des Drehmesssensors (220) beschreibt, oder eine Temperaturnachricht (126), die eine Temperatur (T) am Drehmesssensor (220) beschreibt.

4. Signalverarbeitungsvorrichtung (260) nach einem der vorherigen Ansprüche, **gekennzeichnet durch**
- eine Identifikationseinheit (272), die ausgebildet ist zum Erkennen einer Nachrichtenart (NT) der Nachricht (120) anhand einer Eigenschaftskennung (180), die bevorzugt durch zwei Nachrichtenbits (178, 178.1, 178.2) jeder Nachricht (120) gebildet wird, besonders bevorzugt durch die ersten zwei Nachrichtenbits (178, 178.1, 178.2) jeder Nachricht (120) gebildet wird.

5. Signalverarbeitungsvorrichtung (260) nach einem der vorherigen Ansprüche, die
ausgebildet ist, eine Auswahlposition (PSF) als Funktion (F) einer Umdrehung (U) des rotativen Maßkörpers (240) und/oder der Nachrichtensequenz (110) auszuwählen.

6. Signalverarbeitungsvorrichtung (260) nach Anspruch 5, die ausgebildet ist, pro einer Umdrehungsanzahl (US) von Umdrehungen (U) des rotativen Maßkörpers (240) oder pro einer Sequenzanzahl (AS) von Nachrichtensequenzen (110) eine Auswahlposition (PSF) bereitzustellen, wobei die erste Auswahlposition (PSF1) und die zweite Auswahlposition (PSF2) Teil einer ganzzahligen Zahlenfolge (ZF) sind.

7. Signalverarbeitungsvorrichtung (260) nach Anspruch 6 die ausgebildet ist, pro einer Umdrehungsanzahl (US) und/oder Sequenzanzahl (AS) die Zahlenfolge (ZF) um einen ganzzahligen Betrag (B) anzupassen, vorteilhaft den ganzzahligen Betrag (B) zu addieren.

8. Signalverarbeitungsvorrichtung (260) nach Anspruch 6 oder 7, die ausgebildet ist,
- eine mit jeder Umdrehungsanzahl (US) und/oder Sequenzanzahl (AS) ganzzahlig aufsteigende Sequenzposition (PS) als Auswahlposition (PSF) bereitzustellen .

9. Signalverarbeitungsvorrichtung (260) nach einem der Ansprüche 6 bis 8, die ausgebildet ist, eine zufällig erzeugte Zufallszahl (ZZ) als die Auswahlposition (PSF) auszuwählen, wobei
die erste Auswahlposition (PSF1) eine erste Zufallszahl (ZZ1) und für die zweite Auswahlposition (PSF2) eine zweite Zufallszahl (ZZ2) zu erzeugen ist, und
- die Zufallszahl (ZZ) einen ganzzahligen Wert zwischen dem Wert null und dem Wert der Nachrichtenanzahl (A) annehmen kann.

10. Signalverarbeitungsvorrichtung (260) nach einem der vorherigen Ansprüche, **dadurch gekennzeichnet, dass**
- die Nachrichtensequenz (110) eine Nachricht vorbestimmter Art (123) ersten Typs (123A) mit einer Auswahlposition (PSF) ersten Positionstyps (PSFA) und eine zweite Nachricht vorbestimmter Art (123) zweiten Typs (123B) mit einer zweiten Auswahlposition (PSF) zweiten Positionstyps (PSFB) umfasst.

11. Signalverarbeitungsvorrichtung (260) nach Anspruch 10, **dadurch gekennzeichnet, dass**
- die Auswahlposition (PSF) zweiten Positionstyps (PSFB) an der letzten Sequenzposition (PSL) jeder Nachrichtensequenz (110) ist, wobei vorteilhaft die zweite Nachricht vorbestimmter Art (123B) anhand einer Eigenschaftskennung (180) das Ende der Nachrichtensequenz (110) angibt.

12. Drehmesseinrichtung (200) für ein rotierendes Teil (1100), bevorzugt für ein Fahrzeug (1000), besonders bevorzugt für eine Welle oder ein Rad (540) eines Fahrzeugs (1000), aufweisend:
- einen Drehmesssensor (220) mit einem Messwertaufnehmer (221),
- einen rotativen Maßkörper (240) mit einer Merkmalsanzahl (AM) von Messmerkmalen (250), insbesondere wobei die Messmerkmale (250) entlang einer Kreisbahn (248) und/oder äquidistant angeordnet sind,
- eine Signalverarbeitungsvorrichtung (260) gemäß einem der Ansprüche 1 bis 11, die signalführend mit dem Messwertaufnehmer (221) verbunden ist.

13. Drehmesseinrichtung (200) gemäß Anspruch 12, **dadurch gekennzeichnet, dass**
- der rotative Maßkörper (240) als Zahnrad (242) ausgebildet ist, insbesondere ein Messmerkmal (250) als jeweils ein Zahnkopf (256) und jeweils ein Zahntal (258), oder jeweils als eine Zahn-Tal-Paarung (254) aus einem Zahnkopf (256) und einem Zahntal (258), ausgebildet ist.

14. Drehmesssystem (300), bevorzugt für ein Fahrzeug (1000), **gekennzeichnet durch**
- mindestens eine Drehmesseinrichtung (200) nach Anspruch 12 oder 13,
- eine Zuordnungseinheit (1200), die ausgebildet ist, die an einer Auswahlposition (PSF) der Nachrichtensequenz (110) angeordnete Nachricht (120) vorbestimmter Art, insbesondere eine Statusnachricht (124) einer Nachrichtensequenz (110), einem Messmerkmal (250) zuzuordnen.

15. Drehmesssystem (300) gemäß Anspruch 14, **gekennzeichnet durch**
- einen Zuordnungsspeicher (1240), insbesondere Zuordnungstabelle (1242), der ausgebildet ist, für ein oder mehrere Messmerkmale (250) jeweils eine zugeordnete Nachricht vorbestimmter Art (123), insbesondere das Wertetupel (130), zu hinterlegen.

16. Drehmesssystem (300) gemäß Anspruch 14 oder 15, **gekennzeichnet durch**
- eine Diagnoseeinheit (1260), ausgebildet zum Erkennen von einem Fehlerzustand (ZF) und/oder einem Betriebszustand (ZB) in Abhängigkeit des mindestens einen, der Nachricht vorbestimmter Art (123) zugeordneten, Messmerkmals (250), insbesondere in Abhängigkeit des mindestens einen Wertetupels (130).

17. Fahrzeug (1000), aufweisend eine Signalverarbeitungsvorrichtung (260) nach einem der Ansprüche 1 bis 11, insbesondere eine Drehmesseinrichtung (200) nach Anspruch 12 oder 13 und/oder ein Drehmesssystem nach einem der Ansprüche 14 bis 16.

## Claims

1. Signal-processing device (260) for a rotation-measuring apparatus (200), preferably for a vehicle (1000), which rotation-measuring apparatus has a rotation-measuring sensor (220) and a rotary measuring body (240), wherein the rotary measuring body (240) comprises a feature quantity (AM) of measurement features (250), wherein
- the signal-processing device (260) is configured to provide temporally successive message sequences (110), and
- a message sequence (110) comprises a message quantity (A) of successive messages (120), such that
- temporally successive messages (120) are assigned in temporal succession to spatially adjacent measurement features (250), wherein the measurement features (250) interact with the rotation-measuring sensor (220), and each message (120) is provided in a message type (NT, C, T, P) selected from a predetermined quantity of message types, and
- a message (120) arranged at a selection position (PSF) of the message sequence (110) is a message of a predetermined type (123), which describes a feature property (280) of the assigned measurement feature (250),
wherein
- the successive message sequences (110) comprise a first and a second message sequence (110.1, 110.2),
- the signal-processing device (260) is configured to select the selection position (PSF) for the message sequence (110) such that
- for the first message sequence (110.1), a first selection position (PSF1) for a first message of a predetermined type (123.1) is provided, and for the second message sequence (110.2), a second selection position (PSF2) for a second message of the same predetermined type (123.2) is provided,
**characterized in that**
the signal-processing device (260) further comprises:
- a coding unit (268) which is configured to encode and/or decode index information (IX) and/or useful information (IY), wherein
- the coding is carried out by the arrangement of at least one message of a predetermined type (123), preferably a temperature message (126), at a sequence position (PS) in a message sequence (110).

2. Signal-processing device (260) according to claim 1, **characterized in that**
- it is configured to select a selection position (PSF, PSF1, PSF2) for each message sequence (110, 110.1, 110.2).

3. Signal-processing device (260) according to either claim 1 or claim 2,
**characterized in that**
- the message of a predetermined type (123) is a status message (124), in particular a peak-to-peak message (125) describing an amplitude of a local measurement-signal change of the rotation-measuring sensor (220), or a temperature message (126) describing a temperature (T) at the rotation-measuring sensor (220).

4. Signal-processing device (260) according to any of the preceding claims,
**characterized by**
- an identification unit (272) which is configured to recognize a message type (NT) of the message (120) on the basis of a property identifier (180), which is preferably formed by two message bits (178, 178.1, 178.2) of each message (120), particularly preferably formed by the first two message bits (178, 178.1, 178.2) of each message (120).

5. Signal-processing device (260) according to any of the preceding claims, which is configured to select a selection position (PSF) as a function (F) of a revolution (U) of the rotary measuring body (240) and/or of the message sequence (110).

6. Signal-processing device (260) according to claim 5, which is configured to provide a selection position (PSF) per a revolution quantity (US) of revolutions (U) of the rotary measuring body (240) or per a sequence quantity (AS) of message sequences (110), wherein the first selection position (PSF1) and the second selection position (PSF2) are part of an integer number sequence (ZF).

7. Signal-processing device (260) according to claim 6, which is configured to adapt the number sequence (ZF) by an integer amount (B) per a revolution quantity (US) and/or sequence quantity (AS), in order to advantageously add the integer amount (B).

8. Signal-processing device (260) according to either claim 6 or claim 7, which is configured to
- provide, as a selection position (PSF), a sequence position (PS) ascending in integers with each number of revolutions (US) and/or sequence quantity (AS).

9. Signal-processing device (260) according to any of claims 6 to 8, which is configured to select a randomly generated random number (ZZ) as the selection position (PSF), wherein
a first random number (ZZ1) is to be generated for the first selection position (PSF1) and a second random number (ZZ2) is to be generated for the second selection position (PSF2), and
- the random number (ZZ) can take an integer value between zero and the value of the message quantity (A).

10. Signal-processing device (260) according to any of the preceding claims,
**characterized in that**
- the message sequence (110) comprises a message of a predetermined type (123) of a first type (123A) having a selection position (PSF) of a first position type (PSFA) and a second message of a predetermined type (123) of a second type (123B) having a second selection position (PSF) of a second position type (PSFB).

11. Signal-processing device (260) according to claim 10, **characterized in that**
- the selection position (PSF) of the second position type (PSFB) is at the last sequence position (PSL) of each message sequence (110), wherein advantageously the second message of a predetermined type (123B) indicates the end of the message sequence (110) by means of a property identifier (180).

12. Rotation-measuring apparatus (200) for a rotating part (1100), preferably for a vehicle (1000), particularly preferably for a shaft or a wheel (540) of a vehicle (1000), comprising:
- a rotation-measuring sensor (220) having a measured-value pickup (221),
- a rotary measuring body (240) having a feature quantity (AM) of measurement features (250), in particular wherein the measurement features (250) are arranged along a circular path (248) and/or equidistantly,
- a signal-processing device (260) according to any of claims 1 to 11, which is connected to the measured-value pickup (221) in a signal-carrying manner.

13. Rotation-measuring apparatus (200) according to claim 12,
**characterized in that**
- the rotary measuring body (240) is designed as a gear wheel (242), in particular a measurement feature (250) is designed in each case as a tooth tip (256) and a tooth root (258), or as a tooth-root pairing (254) consisting of a tooth tip (256) and a tooth root (258).

14. Rotation-measuring system (300), preferably for a vehicle (1000),
**characterized by**
- at least one rotation-measuring apparatus (200) according to claim 12 or 13,
- an assignment unit (1200) which is configured to assign the message (120) of a predetermined type arranged at a fixed sequence position (PSF) of the message sequence (110), in particular a status message (124) of a message sequence (110), to a measurement feature (250).

15. Rotation-measuring system (300) according to claim 14, **characterized by**
- an assignment memory (1240), in particular an assignment table (1242), which is configured to store an assigned message of a predetermined type (123), in particular the value tuple (130), for each of one or more measurement features (250).

16. Rotation-measuring system (300) according to either claim 14 or claim 15, **characterized by**
- a diagnostic unit (1260) configured to detect an error state (ZF) and/or an operating state (ZB) on the basis of the at least one measurement feature (250) assigned to the message of a predetermined type (123), in particular on the basis of the at least one value tuple (130).

17. Vehicle (1000) comprising a signal-processing device (260) according to any of claims 1 to 11, in particular a rotation-measuring apparatus (200) according to either claim 12 or claim 13 and/or a rotation-measuring system according to any of claims 14 to 16.

## Revendications

1. Dispositif de traitement de signal (260) pour un appareil de mesure de rotation (200), de préférence pour un véhicule (1000), comportant un capteur de mesure de rotation (220) et un corps de mesure rotatif (240), dans lequel le corps de mesure rotatif (240) présente un nombre de caractéristiques (AM) de caractéristiques de mesure (250), dans lequel
- le dispositif de traitement de signal (260) est configuré pour mettre à disposition des séquences de messages (110) se succédant dans le temps, et - une séquence de messages (110) présente un certain nombre de messages (A) de messages (120) se succédant, de telle sorte que
- des messages (120) se succédant dans le temps sont associés successivement dans le temps à des caractéristiques de mesure (250) localement voisines, dans lequel les caractéristiques de mesure (250) interagissent avec le capteur de mesure de rotation (220), et chaque message (120) est mis à disposition dans un type de message (NT, C, T, P) sélectionné parmi un nombre prédéterminé de types de messages, et
- un message (120) disposé à une position de sélection (PSF) de la séquence de messages (110) est un message de type prédéterminé (123) qui décrit une propriété caractéristique (280) de la caractéristique de mesure (250) associée,
dans lequel
- les séquences de messages (110) se succédant présentent une première et une seconde séquence de messages (110.1, 110.2),
- le dispositif de traitement de signal (260) est configuré pour sélectionner la position de sélection (PSF) pour la séquence de messages (110), de telle sorte que - pour la première séquence de messages (110.1), une première position de sélection (PSF1) est mise à disposition pour un premier message de type prédéterminé (123.1), et, pour la seconde séquence de messages (110.2), une seconde position de sélection (PSF2) est mise à disposition pour un second message du même type prédéterminé (123.2),
**caractérisé en ce que**
le dispositif de traitement de signal (260) présente en outre :
- une unité de codage (268) qui est configurée pour coder et/ou décoder des informations d'index (IX) et/ou des informations utiles (IY), dans lequel
- le codage est effectué en disposant au moins un message de type prédéterminé (123), de préférence un message de température (126), à une position de séquence (PS) dans une séquence de messages (110).

2. Dispositif de traitement de signal (260) selon la revendication 1,
**caractérisé en ce que**
- celui-ci est configuré pour sélectionner une position de sélection (PSF, PSF1, PSF2) pour chaque séquence de messages (110, 110.1, 110.2).

3. Dispositif de traitement de signal (260) selon la revendication 1 ou 2,
**caractérisé en ce que**
- le message de type prédéterminé (123) est un message d'état (124), en particulier un message crête à crête (125), qui décrit une amplitude d'une variation de signal de mesure locale du capteur de mesure de rotation (220), ou un message de température (126) qui décrit une température (T) au niveau du capteur de mesure de rotation (220).

4. Dispositif de traitement de signal (260) selon l'une des revendications précédentes, **caractérisé par**
- une unité d'identification (272) qui est configurée pour reconnaître un type de message (NT) du message (120) à l'aide d'un identificateur de propriété (180) qui est formé de préférence par deux bits de message (178, 178.1, 178.2) de chaque message (120), de manière particulièrement préférée par les deux premiers bits de message (178, 178.1, 178.2) de chaque message (120).

5. Dispositif de traitement de signal (260) selon l'une des revendications précédentes, configuré pour sélectionner une position de sélection (PSF) en fonction (F) d'une rotation (U) du corps de mesure rotatif (240) et/ou de la séquence de messages (110).

6. Dispositif de traitement de signal (260) selon la revendication 5, configuré pour fournir une position de sélection (PSF) par nombre de rotations (US) de rotations (U) du corps de mesure rotatif (240) ou par nombre de séquences (AS) de séquences de messages (110), dans lequel la première position de sélection (PSF1) et la seconde position de sélection (PSF2) font partie d'une séquence de nombres entiers (ZF).

7. Dispositif de traitement de signal (260) selon la revendication 6, configuré pour adapter la séquence de nombres (ZF) d'une valeur entière (B) par nombre de rotations (US) et/ou nombre de séquences (AS), préférablement pour additionner la valeur entière (B).

8. Dispositif de traitement de signal (260) selon la revendication 6 ou 7, configuré pour
- fournir une position de séquence (PS) croissante d'un entier avec chaque nombre de rotations (US) et/ou nombre de séquences (AS) comme position de sélection (PSF).

9. Dispositif de traitement de signal (260) selon l'une des revendications 6 à 8, configuré pour sélectionner un nombre aléatoire (ZZ) généré de manière aléatoire comme position de sélection (PSF), dans lequel
un premier nombre aléatoire (ZZ1) doit être généré pour la première position de sélection (PSF1) et un second nombre aléatoire (ZZ2) doit être généré pour la seconde position de sélection (PSF2), et
- le nombre aléatoire (ZZ) peut prendre une valeur entière comprise entre la valeur zéro et la valeur du nombre de messages (A).

10. Dispositif de traitement de signal (260) selon l'une des revendications précédentes, **caractérisé en ce que**
- la séquence de messages (110) comprend un message de type prédéterminé (123) d'un premier type (123A) comportant une position de sélection (PSF) d'un premier type de position (PSFA) et un second message de type prédéterminé (123) d'un second type (123B) comportant une seconde position de sélection (PSF) d'un second type de position (PSFB).

11. Dispositif de traitement de signal (260) selon la revendication 10,
**caractérisé en ce que**
- la position de sélection (PSF) est du second type de position (PSFB) à la dernière position de séquence (PSL) de chaque séquence de messages (110), dans lequel, de préférence, le second message de type prédéterminé (123B) indique la fin de la séquence de messages (110) au moyen d'un identificateur de propriété (180).

12. Appareil de mesure de rotation (200) pour une pièce rotative (1100), de préférence pour un véhicule (1000), de manière particulièrement préférée pour un arbre ou une roue (540) d'un véhicule (1000), présentant :
- un capteur de mesure de rotation (220) comportant un transducteur de mesure (221),
- un corps de mesure rotatif (240) comportant un nombre de caractéristiques (AM) de caractéristiques de mesure (250), en particulier dans lequel les caractéristiques de mesure (250) sont disposées le long d'une trajectoire circulaire (248) et/ou de manière équidistante,
- un dispositif de traitement de signal (260) selon l'une des revendications 1 à 11 qui est connecté au transducteur de mesure (221) de manière à conduire le signal.

13. Appareil de mesure de rotation (200) selon la revendication 12,
**caractérisé en ce que**
- le corps de mesure rotatif (240) est conçu sous la forme d'une roue dentée (242), en particulier une caractéristique de mesure (250) est conçue sous la forme de respectivement une tête de dent (256) et respectivement un creux de dent (258), ou respectivement sous la forme d'une paire dent/creux (254) constituée d'une tête de dent (256) et d'un creux de dent (258).

14. Système de mesure de rotation (300), de préférence pour un véhicule (1000), **caractérisé par**
- au moins un appareil de mesure de rotation (200) selon la revendication 12 ou 13,
- une unité d'association (1200) configurée pour associer une caractéristique de mesure (250) à un message (120) de type prédéterminé disposé à une position de sélection (PSF) de la séquence de messages (110), en particulier un message d'état (124) d'une séquence de messages (110).

15. Système de mesure de rotation (300) selon la revendication 14,
**caractérisé par**
- une mémoire d'association (1240), en particulier un tableau d'association (1242), qui est configurée pour enregistrer, pour une ou plusieurs caractéristiques de mesure (250), respectivement un message associé de type prédéterminé (123), en particulier le tuple de valeurs (130).

16. Système de mesure de rotation (300) selon la revendication 14 ou 15,
**caractérisé par**
- une unité de diagnostic (1260), configurée pour la reconnaissance d'un état d'erreur (ZF) et/ou d'un état de fonctionnement (ZB) en fonction de l'au moins une caractéristique de mesure (250) associée au message de type prédéterminé (123), en particulier en fonction de l'au moins un tuple de valeurs (130).

17. Véhicule (1000), présentant un dispositif de traitement de signal (260) selon l'une des revendications 1 à 11, en particulier un appareil de mesure de rotation (200) selon la revendication 12 ou 13 et/ou un système de mesure de rotation selon l'une des revendications 14 à 16.
